# EUROPEAN PATENT APPLICATION

(11) **EP 4 272 987 A2**
(43) Date of publication of application: **08.11.2023**
(21) Application number: 23169135.3
(22) Date of filing: 21.04.2023
(51) Int. Cl.: B60K 35/00, B60K 37/06

(54) **DISPLAY DEVICE AND WORK VEHICLE**

(30) Priority: 27.04.2022 JP 2022073470; 27.04.2022 JP 2022073468; 31.01.2023 JP 2023012873
(71) Applicant: Yanmar Holdings Co., Ltd., Osaka-shi, Osaka (JP)
(72) Inventor: NOMOTO, Soshi, Okayama-shi (JP); NASU, Hiroyuki, Okayama-shi (JP)
(74) Representative: Dennemeyer & Associates S.A.

(57) **Abstract**

[Problem] To provide a technology capable of improving visibility and operability of a display device to display information about the autonomous travel and improving the operability of operations associated with the autonomous travel.

[Solution] An exemplary work vehicle capable of an autonomous travel includes: a driver's seat; a steering manipulator located in front of the driver's seat; and a display device that displays information about the autonomous travel. The display device is located on one side in a left-right direction of the steering manipulator and includes: a display that has a display screen to display information about the autonomous travel of the work vehicle; and a manipulator connected to the display and having a manipulation member to enable operation associated with the autonomous travel.

## Description

### TECHNICAL FIELD

The present disclosure relates to a display device and a work vehicle.

### BACKGROUND ART

Patent Document 1 discloses a work vehicle including a steering handle and a steering shaft that rotatably supports the steering handle, in which the work vehicle can be driven by automatically steering the steering handle. The work vehicle is equipped with a display device located in front of the steering shaft. The work vehicle is also equipped with a plurality of switches that are located around the steering shaft and enable operations associated with an autonomous steering. The plurality of switches include switches on a panel cover and switches on a column cover.

### PRIOR ART DOCUMENT

### PATENT DOCUMENT

Patent Document 1: Japanese Patent Laid-open Publication No. 2021-151867

### SUMMARY OF INVENTION

### TECHNICAL PROBLEM

If the display device is installed in front of the steering wheel, a display screen of the display device may be difficult to see due to, for example, the angle of the steering wheel, the driver's posture, or the driver's physique. In other words, it is concerned that it is difficult to drive the work vehicle while seeing the display screen. In a configuration in which switches enabling operations associated with autonomous steering are installed on the panel cover or column cover, it is concerned that the positions of the plurality of switches associated with the autonomous steering are dispersed, this makes it difficult to understand operations associated with the autonomous steering.

In view of the foregoing, an object of the present disclosure is to provide a technology capable of improving visibility and operability of a display device to display information associated with autonomous travel and a technology capable of improving the operability of operations associated with the autonomous travel.

### SOLUTION TO PROBLEM

An exemplary work vehicle of the present disclosure is a work vehicle capable of an autonomous travel including: a driver's seat; a steering manipulator located in front of the driver's seat; and a display device that displays information about the autonomous travel. The display device is located on one side in a left-right direction of the steering manipulator. An exemplary display device of the present disclosure is a display device included in a work vehicle including: a display that has a display screen to display information about an autonomous travel of the work vehicle; and a manipulator connected to the display and having a manipulation member to enable operation associated with the autonomous travel.

### ADVANTAGEOUS EFFECTS OF INVENTION

According to an exemplary present disclosure, a technology capable of improving visibility and operability of a display device to display information associated with autonomous travel and a technology capable of improving the operability of operations associated with the autonomous travel are provided.

### BRIEF DESCRIPTION OF DRAWINGS

FIG. 1 is a schematic side view illustrating a configuration of a tractor,
FIG. 2 is a schematic plan view illustrating a configuration of the tractor,
FIG. 3 is a block diagram illustrating a configuration of the tractor,
FIG. 4A is a diagram illustrating a method of setting a reference line,
FIG. 4B is a diagram illustrating a first alternative embodiment of a method of setting the reference line,
FIG. 4C is a diagram illustrating a second alternative embodiment of a method of setting the reference line,
FIG. 5 is a front view illustrating a configuration of a display device,
FIG. 6 is a side view illustrating a configuration of the display device,
FIG. 7 is a schematic perspective view illustrating a configuration of the display device with a display cover removed,
FIG. 8 is a schematic diagram to explain about a configuration of a monitor manipulator,
FIG. 9 is an enlarged schematic plan view around a cockpit of the tractor,
FIG. 10 is an enlarged schematic side view around the cockpit of the tractor,
FIG. 11 is a schematic perspective view illustrating a mount structure of the display device on the tractor,
FIG. 12A is a schematic perspective view illustrating a relationship between the display device and a part of a support member,
FIG. 12B is a schematic perspective view illustrating a relationship between the display device and a part of the support member,
FIG. 13 is a perspective view illustrating schematic configuration of the tractor with a cabin specification,
FIG. 14 is a perspective view illustrating a schematic configuration of a tractor according to another embodiment,
FIG. 15 is a schematic view illustrating mount structures of the display device according to another embodiment,
FIG. 16A is a schematic perspective view illustrating a relationship between the display device and the support member that the tractor according to another embodiment includes, and
FIG. 16B is a schematic perspective view illustrating a relationship between the display device and the support member that the tractor according to another embodiment includes.

### DESCRIPTION OF EMBODIMENTS

Now, an embodiment of the present disclosure is described with reference to the drawings. In the present embodiment, an example, in which the work vehicle is a tractor, will be described. However, the work vehicle may be another work vehicle other than the tractor, such as a variety of a harvester, a rice transplanter, a combine, a civil engineering and construction work machine, snow plow car, etc.

Further, in this specification, directions are defined as below. First, the direction in which the tractor as the work vehicle advances during the work is defined as "front" and the opposite direction is defined as "rear". The right side of an advance direction of the tractor is defined as "right" and the left side thereof is defined as "left". A direction perpendicular to a front-rear direction and a left-right direction of the tractor is defined as an up-down direction. In this case, the gravity direction is a down direction, and the direction opposite to the down direction is defined as an up direction. A plane perpendicular to the up-down direction is defined as a horizontal plane and a direction along a horizontal plane is defined as a horizontal direction.

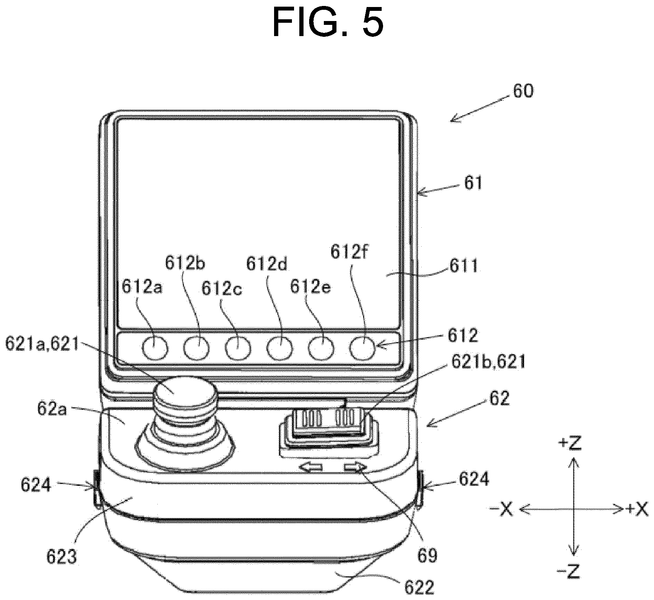

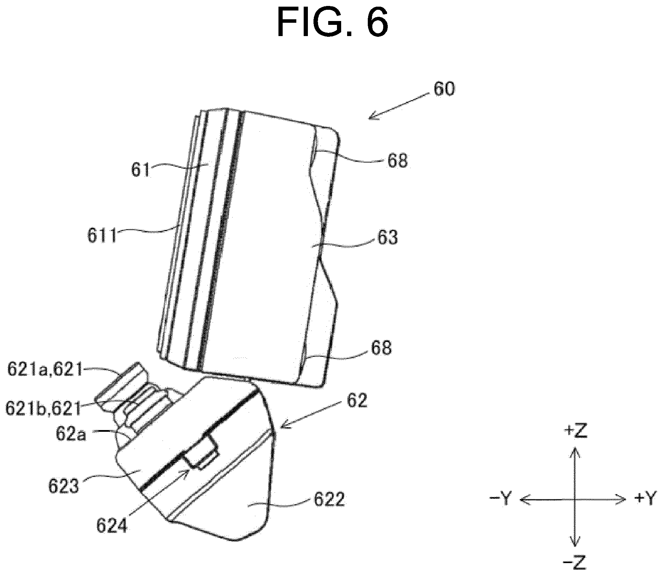

A display device that the work vehicle is equipped with can change the orientation thereof on the work vehicle as described below. When describing the display device alone, directions are defined according to XYZ coordinate axes shown in FIGS. 5 and 6. A direction along an X-axis is defined as an X direction, a direction along a Y-axis is defined as a Y direction, and a direction along a Z-axis is defined as a Z direction. The Z direction coincides with the up-down direction mentioned above. The X direction and the Y direction are along the horizontal plane and orthogonal to each other. The X direction can be deemed as a width direction of the display device, and the Y direction can be deemed as a depth direction of the display device. In some cases, the X direction may be the left-right and the Y direction may be the front-rear direction.

Note that the directions described above are merely designations used for explanation and are not intended to limit the practical positional relationship and directions.

### 1. Summary of Work Vehicle

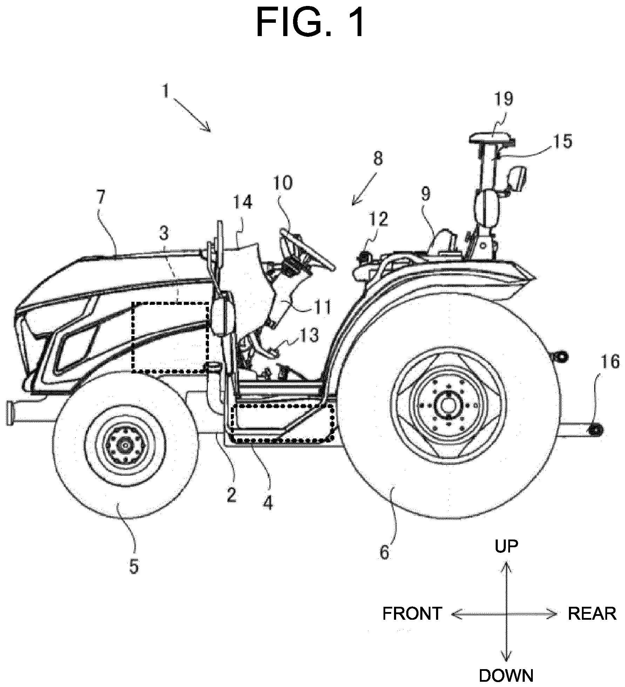

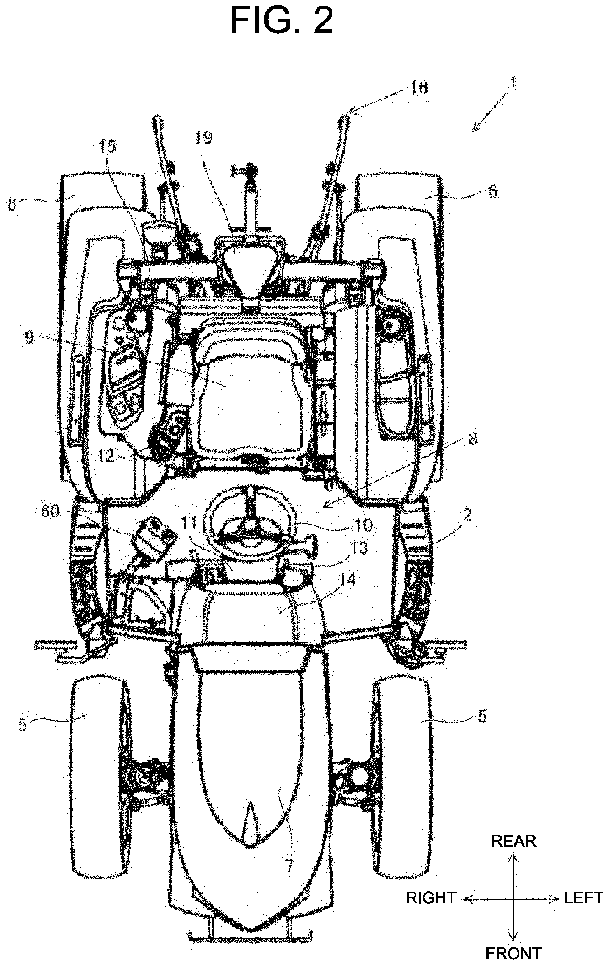

FIG. 1 is a schematic side view illustrating a configuration of a tractor 1 according to the present embodiment. FIG. 2 is a schematic plan view illustrating a configuration of the tractor 1 according to the present embodiment. As shown in FIG. 1, the tractor 1 includes a vehicle body 2, an engine 3, and a mission case 4.

As shown in FIGS. 1 and 2, a pair of front wheels 5 on each side are located at a front portion of the vehicle body 2. A pair of rear wheels 6 on each side are located at a rear portion of the vehicle body 2. The vehicle body 2 can travel by the front wheels 5 and the rear wheels 6. That is, the tractor 1 of the present embodiment is a wheel tractor. However, the tractor 1 may be a crawler tractor.

The engine 3 is disposed on the front portion of the vehicle body 2 so as to be covered by a hood 7. The engine 3 is a driving power source of the tractor 1. In the present embodiment, the engine 3 is a diesel engine. However, the engine 3 may be a gasoline engine. The tractor 1 may be driven by another driving source, such as an electric motor, instead of the engine.

The mission case 4 is located at the rear portion of the engine 3 and below a cockpit 8. A power transmission unit (not shown) is located inside the mission case 4. Rotational power of the engine 3 is transmitted to at least one of the front wheels 5 and the rear wheels 6 via the power transmission unit inside the mission case 4.

The cockpit 8 is located in the rear of the engine 3 in the vehicle body 2. The driver (operator) gets on the cockpit 8. The cockpit 8 has a driver's seat 9 and a steering manipulator 10. In other words, the tractor 1 is provided with the driver's seat 9 and the steering manipulator 10. The driver sits on the driver's seat 9. The steering manipulator 10 is located in front of the driver's seat 9. The steering manipulator 10 is a steering wheel that is manipulated by the driver sitting on the driver's seat 9. The steering manipulator 10 is rotatably supported by a steering shaft (not shown) located inside a steering column 11. The orientation of the front wheels 5 can be changed by rotating the steering manipulator 10.

In the cockpit 8, as other components, an operation lever 12 and a pedal 13 that are operated by the driver, and a front panel 14 on which a meter indicating a speed of the tractor 1 and the like are located, for example. The operation lever 12 may include various types of levers such as a main shift lever, a sub-shift lever, and a work lever, for example. The pedal 13 may include various types of pedals such as an accelerator pedal and a brake pedal, for example.

In the present embodiment, a ROPS frame 15 is provided in the rear of the driver's seat 9. The ROPS frame 15 allows the tractor 1 to protect the driver when overturned. The tractor 1 may have a cabin specification in which the driver's seat 9 is covered by a cabin, instead of a ROPS specification in which the ROPS frame 15 is provided.

At the rear portion of the vehicle body 2, there is provided a work machine coupling part 16 which is composed of a three-point linkage mechanism or the like. A work machine can be attached to the work machine coupling part 16. The work machine may be, for example, a cultivator, plow, fertilizer applicator, pesticide sprayer, harvesting equipment, or reaping device A lifting-lowering device (not shown) with a hydraulic system such as a lifting-lowering cylinder is provided at the rear portion of the vehicle body 2. The lifting-lowering device can lift and lower the work machine by lifting or lowering the work machine coupling part 16. The power generated by the engine 3 can be transmitted to the work machine being towed via a mission case 4 and a power takeoff shaft (PTO shaft; not shown) located at the rear portion of the vehicle body 2.

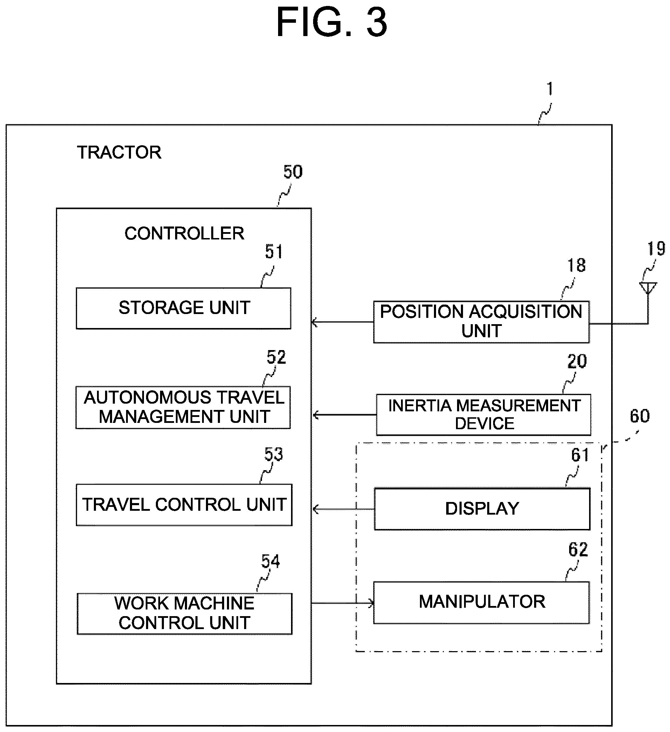

FIG. 3 is a block diagram illustrating a configuration of the tractor 1 according to the present embodiment. As shown in FIG. 3, the tractor 1 includes a controller 50. The controller 50 is a computer including an arithmetic device, an input/output, and a storage unit 51, for example. The arithmetic device is a processor or a microprocessor, for example. The storage unit 51 is a main memory such as a ROM (Read Only Memory) and an RAM (Random Access Memory). The storage unit 51 may further include an auxiliary storage device such as a Hard Disk Drive (HDD) or a Solid State Drive (SSD). Various types of programs, data and the like are stored In the storage unit 51. The arithmetic device reads out the various types of programs from the storage unit 51 and executes them.

Cooperation of the hardware and the software described above can cause the controller 50 to function as an autonomous travel management unit 52, a travel control unit 53, and a work machine control unit 54. The controller 50 may be a stand-alone hardware, or may be composed of a plurality of pieces of hardware that can communicate with each other. That is, the autonomous travel management unit 52, the travel control unit 53, and the work machine control unit 54 may be composed of a single control device or a plurality of control devices. For example, the autonomous travel management unit 52 may be composed of a first control device, the travel control unit 53 may be composed of a second control device, and the work machine control unit 54 may be composed of a third control device.

As can be seen from the autonomous travel management unit 52 that is provided in the tractor, the tractor 1 capable of traveling autonomously is provided. Here, the autonomous travel means that at least the steering of the tractor 1 is autonomously performed so that the tractor 1 travels along a predetermined route by systems associated with travel being controlled with the controller 50 included in the tractor 1. In addition to the steering, the autonomous travel may be configured to autonomously perform at least one of a vehicle speed and the work by the work machine. In the present embodiment, the steering is autonomously performed to travel along the predetermined route by means of the autonomous travel. That is, the tractor 1 is provided so as to be able to perform an autonomous steering travel.

There are connected to the controller 50 a position acquisition unit 18, an inertia measurement device 20, a display 61, and a manipulator 62.

The position acquisition unit 18 acquires a position of the tractor 1, for example, as latitude and longitude information using positioning signals received from a positioning satellite by a positioning antenna 19. The position acquisition unit 18 outputs position information of the tractor 1 to the controller 50. The position acquisition unit 18 may perform positioning using, for example, a known Real Time Kinematic GNSS (RTK-GNSS) method after receiving a positioning signal from a reference station (not shown) in an appropriate manner. For example, the position acquisition unit 18 may perform positioning using a Differential GNSS (DGNSS) method. In the present embodiment, the positioning antenna 19 is attached to the ROPS frame 15. The attaching position of the positioning antenna 19 may be changed as appropriate.

The inertial measurement device 20 includes a 3-axis angular speed sensor and a 3-way acceleration sensor. The inertial measurement device 20 outputs measured information to the controller 50. The inertial measurement device 20 makes it possible to measure inertial information such as a yaw angle, a pitch angle, and a roll angle of the vehicle body 2.

The display 61 displays information in accordance with instructions by the controller 50 as appropriate. In the present embodiment, the display 61 displays information about the autonomous travel of the tractor 1. Details of the display 61 are described below.

The driver sitting on the driver's seat 9 manipulates the manipulator 62. The manipulator 62 is provided so that the driver can perform operations associated with the autonomous travel of the tractor 1. Commands by the driver are input to the controller 50 via the manipulator 62. Details of the manipulator 62 are described below.

The autonomous travel management unit 52 performs management about the autonomous travel. For example, the autonomous travel management unit 52 performs a start process and an end process of the autonomous travel in accordance with the commands input by the driver via the manipulator 62. In addition, the autonomous travel management unit 52 obtains a position and orientation of the vehicle body 2 of the tractor 1 based on information acquired from the position acquisition unit 18 and the inertia measurement device 20, for example. The autonomous travel management unit 52 also outputs control instructions associated with the autonomous travel according to a relationship between the obtained position of the vehicle body and the predetermined route for the autonomous travel, for example.

The travel control unit 53 controls a travel system of the tractor 1. The travel control unit 53 controls an autonomous steering mechanism (not shown) in accordance with the control instructions from the autonomous travel management unit 52 so that the vehicle body 2 of the tractor 1 travels along the predetermined route, for example. The autonomous steering mechanism causes the abovementioned steering shaft disposed in the steering column 11 to autonomously rotate so that the orientation of the front wheels 5 is autonomously changed. The autonomous steering mechanism includes a steering motor and a power transmission component that is composed of a gear mechanism, etc., for example. The action of the steering motor is controlled according to the position of the vehicle body. Since the action of the steering motor is transmitted to the steering shaft via the power transmission component, the orientation of the front wheels 5 can be controlled by controlling the steering motor.

The work machine control unit 54 controls a work system of the tractor 1. The work machine control unit 54 controls the lifting and lowering of the work machine coupling part 16 according to operation of the operation lever 12 provided in the cockpit 8 or the instructions from the autonomous travel management unit 52, etc., for example.

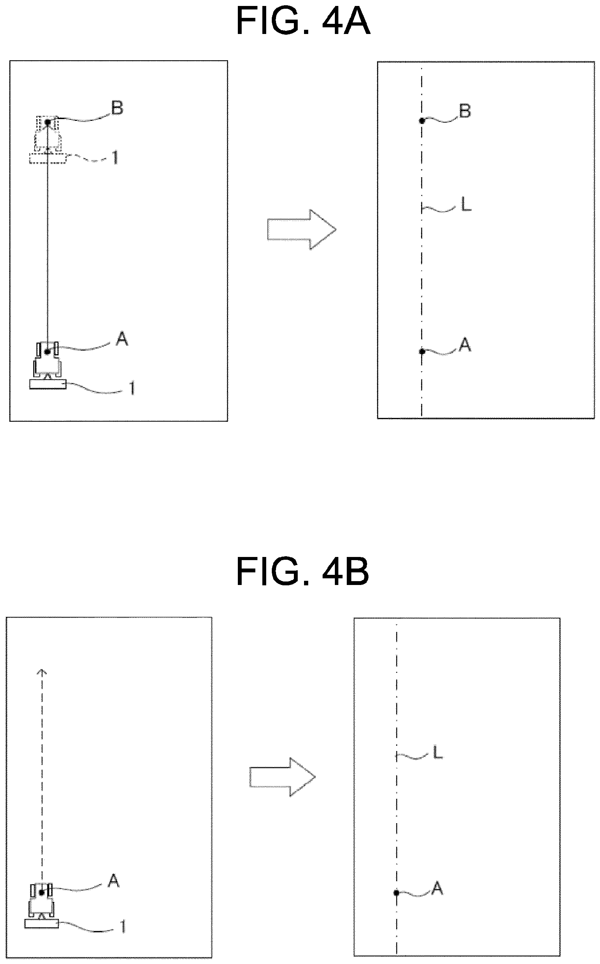

Here, the autonomous travel (autonomous steering travel), which is performed by the tractor 1 according to the present embodiment, is described in brief below. At the beginning of performing the autonomous travel, a reference line L is set first. FIG. 4A is a diagram illustrating a method of setting the reference line L.

When setting the reference line L, the tractor 1 is first moved to an appropriate location in the field (point A in the drawing), and the point A is registered. The point A is registered in accordance with a command to resister the point A by the driver. The position of the vehicle body obtained by the position acquisition unit 18 at a time when the command to register the point A is issued is registered as the position of the point A.

Once the point A is registered, the driver manually operates the tractor 1 to move forward up to a predetermined position (point B in the drawing). When the tractor 1 reaches the predetermined position, the B point is registered. The point B is registered in accordance with a command to resister the point B by the driver. The position of the vehicle body obtained by the position acquisition unit 18 at a time when the command to register the point B is issued is registered as the position of the point B. Once the points A and B are registered, a straight line passing through the points A and B is set as the reference line L.

Once the reference line L is set, lines parallel to the reference line L are generated as autonomous travel lines at predetermined intervals. During the autonomous travel (autonomous steering travel), steering control of the tractor 1 in a traveling direction thereof is performed so that the position of the vehicle body obtained by the position acquisition unit 18 is on the autonomous traveling lines.

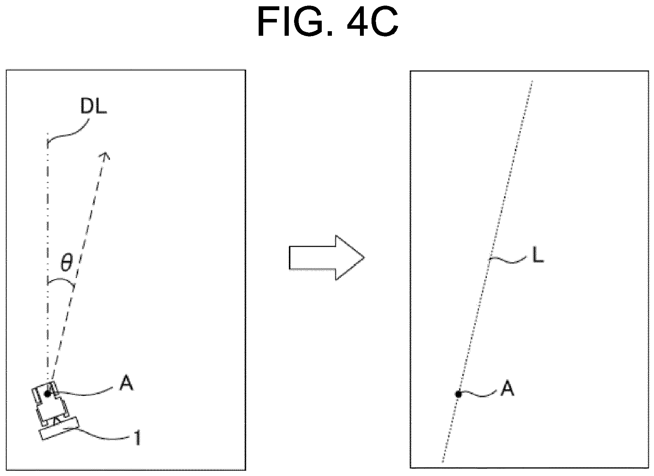

The method of setting the reference line L may be a method other than the method shown in FIG. 4A, and it may be a method shown in FIG. 4B or a method shown in FIG. 4C, for example,. FIG. 4B is a diagram illustrating a first alternative embodiment of a method of setting the reference line L. FIG. 4C is a diagram illustrating a second alternative embodiment of a method of setting the reference line L.

Also in the method shown in FIG. 4B, similar to the method shown in FIG. 4A, the tractor 1 is first moved to the appropriate location in the field (point A in the drawing), and the point A is registered. Once the point A is registered, the reference line L is automatically set or registered according to the orientation of the vehicle body 2 at a time when the point A is registered (in FIG. 4B, the orientation corresponds to a direction indicated by a dashed-line arrow). The orientation of the vehicle body 2 can be obtained by information from the inertia measurement device 20.

Also in the method shown in FIG. 4C, similar to the method shown in FIG. 4A, the tractor 1 is moved to the appropriate location in the field (point A in the drawing) and the point A is registered. Once the point A is registered, the reference line L is automatically set according to the set azimuth angle θ. In the example shown in FIG. 4C, a two-dot chain line DL indicates a north direction as viewed from the vehicle body 2. The dashed arrow line in FIG. 4C indicates a radial direction for the set azimuth angle. The azimuth angle is defined such that the north direction is 0° and a clockwise direction is positive, for example. The azimuth angle θ is set by the driver, for example.

### 2. Display Device

### 2-1. Configuration of Display Device

As shown in FIGS. 1 through 3, the tractor 1 is equipped with a display device 60. As shown in FIG. 3, the display device 60 is provided with the display 61 and the manipulator 62. FIG. 5 is a front view illustrating a configuration of the display device 60 according to the present embodiment. FIG. 6 is a side view illustrating a configuration of the display device 60 according to the present embodiment.

The display 61 has a display screen 611 to display information about the autonomous travel of the tractor 1. That is, the display device 60 displays information about the autonomous travel. The display screen 611 can be composed of, for example, a liquid crystal panel or an organic electroluminescence (EL) panel. In the present embodiment, the display 61 is generally rectangular in shape, and the display screen 611 is rectangular in shape. However, the display 61 and the display screen 611 may have other shapes.

The manipulator 62 is connected to the display 61. The manipulator 62 has a manipulation member 621 that enables operations associated with the autonomous travel of the tractor 1. That is, the display device 60 according to the present embodiment has a unit structure into which the display 61 which displays information about the autonomous travel and the manipulator 62 which performs operations associated with autonomous travel are integrated. The display device 60 can be referred to as a manipulation display device.

The display device 60, into which parts associated with operations of the autonomous travel are integrated, can be located independently of other operation parts, thereby making the operations associated with the autonomous travel intuitive and easy to understand. In other words, according to the present embodiment, the operability of operations associated with autonomous travel can be improved. Since the display 61 and the manipulator 62 are connected and located close to each other, during the autonomous travel, the driver can easily operate the manipulator 62 while viewing the display screen 611 which displays information about the autonomous travel. The manipulator 62 and the display 61 may be provided separately. Furthermore, other manipulation members having the same function as the manipulation members provided in the manipulator 62 may be provided in other locations. Other locations may be, for example, the steering manipulator 10, the steering column 11, or the operation lever 12 located next to the driver's seat 9. Furthermore, each the manipulation members may be provided at other locations mentioned above without providing the manipulator 62. In this configuration, the display 61 may be located at a position on one side of the steering manipulator 10 in the left-right direction or be located in front of the steering column 11. The front side of the steering column 11 may be, for example, the top of the front panel 14.

In the present embodiment, as shown in FIGS. 5 and 6, the manipulator 62 is located on the -Z side with respect to the display 61. In other words, the manipulator 62 is located below the display 61. The manipulator 62 is positioned below the display 61, thereby reducing the possibility in which hands or other body parts interrupt the view of the display screen 611 during operation and improving operability.

As shown in FIG. 6, the display device 60 is further equipped with a display cover 63. The display cover 63 is, for example, a plastic cover. The display cover 63 has a box shape with an opening on the -Y side. The display cover 63 covers a surface on the +Y side of the display 61, which is opposite to a surface on the -Y side where the display screen 611 is located. In other words, the display cover 63 covers the back of the display 61. The display cover 63 is detachable. The display cover 63 is provided to keep it from protruding from the outermost periphery of the display 61, thereby making the display device 60 compact in shape.

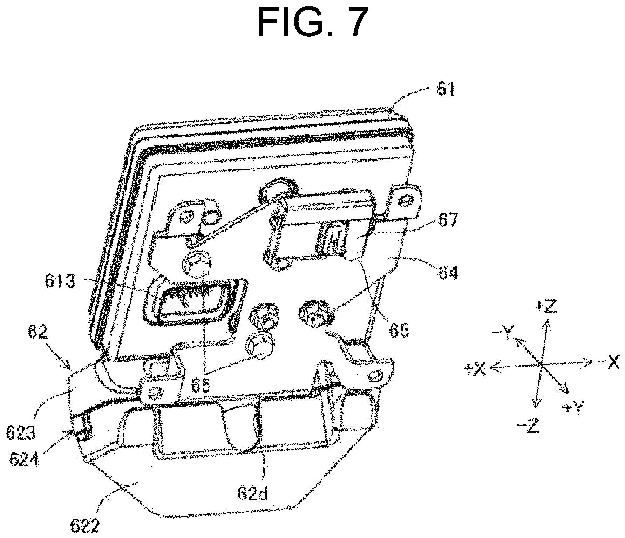

FIG. 7 is a schematic perspective view illustrating a configuration of the display device 60 with the display cover 63 removed. FIG. 7 is a diagram as viewed from the rear side of the display device 60. As shown in FIG. 7, a coupling frame 64 is attached to the surface on the +Y side (back surface) of the display 61. In the present embodiment, the coupling frame 64 is fixed with bolts 65 to the display 61. The -Z side (lower) end of the coupling frame 64 extends to the inside of the manipulator 62 and is attached to the manipulator 62. In the present embodiment, the coupling frame 64 is secured with tapping screws to the manipulator with a through hole (not shown) provided in the frame overlapping a boss (not shown) provided inside the manipulator 62 (in detail, a second housing 623 described below). The coupling frame 64 may be secured to the manipulator 62 using a combination of the through hole (not shown) provided in the frame and a pin (not shown) provided inside the manipulator 62. That is, the display 61 and the manipulator 62 are connected by the coupling frame 64. In detail, the display 61 and the manipulator 62 are connected to each other by the coupling frame 64 in a relatively unmovable manner. However, the display 61 and the manipulator 62 may be connected to each other in a relatively movable manner.

As shown in FIG. 7, a connector 613 for connecting an electrical wiring (not shown) is provided on the surface on the +Y side (back surface) of the display 61. A fuse 67 for the display 61 is mounted on the surface on the +Y side (back surface) of the coupling frame 64. The display cover 63 covers the coupling frame 64, the connector 613, the fuse 67, and the electrical wiring (not shown) connected to the connector 613 and the fuse 67.

In the present embodiment, the display cover 63 is detachably attached with push rivets 68 (see FIG. 6) to the coupling frame 64. This makes it possible to inspect or replace the fuse 67 by removing the display cover 63 easily. The display cover 63 may be secured to the coupling frame 64 by fixing means other than push rivets, such as screws, for example. The display cover 63 may be detachably attached to the display 61 instead of the coupling frame 64.

In the present embodiment, the manipulator 62 has a box shape, extending in the X direction. As shown in FIG. 6, a surface 62a on which the manipulation member 621 of the manipulator 62 is provided is inclined with respect to the display screen 611. Hereafter, the surface 62a is referred to as the manipulation member placement surface 62a. In detail, the display screen 611 is slightly tilted so that the +Z side and the -Z side of the display screen are oriented toward the +Y side and the -Y side with respect to the Z direction, respectively. The manipulation member placement surface 62a is also tilted in the same orientation as the display screen 611 with respect to the Z direction, but is tilted greater than the display screen 611. As a result, the manipulation member placement surface 62a is inclined with respect to the display screen 611. The manipulation member placement surface 62a is inclined toward the display screen 611 side.

This configuration allows the display screen 611 to take such a posture that the display screen 611 is tilted slightly with respect to the up-down direction in the tractor 1 so that the driver can easily see the display screen 611. When the display screen 611 is located with such the posture, the manipulator 62 can be mounted with the manipulation member placement surface 62a facing upward. This makes it possible to improve the operability of the manipulator 62.

It is preferable that the manipulation members 621 included in the manipulator 62 have at least a first manipulation member among a first manipulation member that enables switching between on and off of the autonomous travel and a second manipulation member that enables operations different from the first manipulation member. By configuring the manipulation members so that a switch for turning on and off the autonomous travel is provided on the manipulator 62 which is integrated with the display 61, the driver can easily operate to start and stop the autonomous travel. However, the manipulation member 621 may be configured to exclude the first manipulation member.

In the present embodiment, as shown in FIGS. 5 and 6, it is more preferable that the manipulation member 621 includes a first manipulation member 621a and a second manipulation member 621b. In addition to the first manipulation member 621a and the second manipulation member 621b, at least one other manipulation member may be located as the manipulation member 621.

In the present embodiment, the first manipulation member 621a and the second manipulation member 621b are arranged side by side in the X direction. The first manipulation member 621a is located on the -X side and the second manipulation member 621b is located on the +X side. However, the arrangement of the first manipulation member 621a and the second manipulation member 621b is not limited thereto and may be changed as appropriate. For example, the first manipulation member 621a and the second manipulation member 621b may be arranged in a direction along the manipulation member placement surface 62a and orthogonal to the X direction. Furthermore, for example, the first manipulation member 621a may be located on the +X side, and the second manipulation member 621b may be located on the -X side.

In the present embodiment, the first manipulation member 621a is a push-type operation button (hereinafter, also referred to as operation button 621a). By pressing the operation button 621a, the autonomous travel can be switched ON and OFF. For example, when the autonomous travel is OFF, pressing the operation button 621a turns on the autonomous travel. When the autonomous travel is ON, pressing the operation button 621a turns off the autonomous travel.

An indication indicating the function of the operation button may be printed on the surface of the operation button 621a. By printing the function on the surface of the button, the driver can immediately learn the function of the operating button 621a. In addition, the configuration of printing functions on the surface of the button can reduce work processes by, for example, reducing a work required to affix a nameplate. The first manipulation member 621a is not limited to a push-type operation button, but may be, for example, an operation lever or a rotary-type operation dial.

In the present embodiment, the second manipulation member 621b is a route correction manipulation member that enables correction of a route of the autonomous travel. The route correction manipulation member is used, in the case where after starting the autonomous travel, the driver determines that the route for the autonomous travel differs from a predetermined route, for example. Also, the route correction manipulation member is used, in the case where position deviation occurs, in which the position of the vehicle body acquired by the position acquisition unit 18 during the autonomous travel is shifted from a position where the vehicle body should be, for example. By operating the route correction manipulation member, the above-mentioned autonomous travel line is shifted, so that the tractor 1 can autonomously travel along a route that is corrected to the predetermined route.

In the present embodiment, the second manipulation member 621b, which is configured as the route correction manipulation member, is a seesaw switch. By pressing down the +X side of the seesaw switch 621b, the position of the autonomous travel line (not shown) displayed on the display screen 611 can be shifted to the +X side. By pressing down the -X side of the seesaw switch 621b, the position of the autonomous travel line displayed on the display screen 611 can be shifted to the -X side.

In the present embodiment, a mark 69 (in detail, arrow) indicating the function of the second manipulation member 621b is provided on the manipulation member placement surface 62a of the manipulator 62. This allows the driver to easily understand intuitively the operation of the second manipulation member 621b. The mark 69 may be formed by hot stamping on the manipulation member placement surface 62a, for example. The second manipulation member 621b may be configured as the operation lever or an operation dial other than the seesaw switch, for example.

In the present embodiment, the manipulator 62 has a first housing 622 and a second housing 623. The first housing 622 is located on more the -Z side (lower side) than the second housing 623. The first housing 622 has a box shape with an opening on the +Z side. The second housing 623 has a box shape with an opening on the -Z side. The second housing 623 has the above-mentioned manipulation member placement surface 62a on the +Z side. In the present embodiment, the first housing 622 and the second housing 623 are made of resin as an example.

The manipulator 62 is formed by placing the first manipulation member 621a and the second manipulation member 621b in the second housing 623 and fitting the first housing 622 to the second housing 623 from the -Z side. The first manipulation member 621a and the second manipulation member 621b are inserted from the +Z side into openings (not shown) provided in the manipulation member placement surface 62a included in the second housing 623, respectively. A part of both the first manipulation member 621a and the second manipulation member 621b protrude outward from the manipulation member placement surface 62a, and the remaining part thereof is disposed inside the manipulator 62. As shown in FIG. 7, a surface on the +Y side (back surface) of the first housing 622 has a wiring aperture 62d. The electrical wiring (not shown) is electrically connected via the wiring aperture 62d to electrical circuitry of the first manipulation member 621a and the second manipulation member 621b.

In the present embodiment, the first housing 622 and the second housing 623 are fastened with snap-fit mechanisms 624 provided at an end of the +X side and an end of the -X side, respectively. Instead of the snap-fit mechanisms 624, a screw fastener, for example, may be used. However, the use of the snap-fit mechanisms 624 allows man-hours for assembly to be reduced.

In the present embodiment, the manipulator 62 has a shape that tapers toward the -Z side. In other words, the manipulator 62 has a shape that tapers downward. In detail, the second housing 623 has a shape whose widths in the X direction and in the Y direction become narrower toward the -Z side. As shown in FIG. 5, the part on the -Z side of the second housing 623 has a trapezoidal shape with the -Z side being shorter than the +Z side in front view. As shown in FIG. 6, the part on the -Z side of the second housing 623 has a trapezoidal shape with the -Z side being shorter than the +Z side in side view.

In this way, by forming the part on the -Z side (lower side) of the manipulator 62 to be narrower, the protrusion of the manipulator 62 can be reduced to make the manipulator 62 easier to grip. This makes it possible to improve the operability of the manipulator 62. This effect can be remarkable when the seesaw switch is employed as the manipulation member as in the present embodiment.

In addition, as shown in FIG. 5, the display 61 has a monitor manipulator 612. The display screen 611 displays the content operable by the monitor manipulator 612. In other words, the monitor manipulator 612 enables operations according to the display on the display screen 611. The monitor manipulator 612 enables operations following the guidance displayed on the display screen 611.

In the present embodiment, the monitor manipulator 612 enables registration and deletion of the above-mentioned point A and point B (see FIGS. 4A, 4B, and 4C), for example. In addition, the monitor manipulator 612 enables changes of setting conditions associated with the autonomous travel. Also, the monitor manipulator 612 enables selection of the registration method for the point A and the point B. For example, it is possible to select any one of the registration methods shown in FIGs. 4A, 4B, and 4C mentioned above.

In the present embodiment, as shown in FIG. 5, the monitor manipulator 612 is located on the -Z side (lower side) of the display screen 611. The monitor manipulator 612 includes a plurality of operation buttons 612a-612f. The operation buttons 612a-612f are physical buttons that can be operated by pressing down. The plurality of operation buttons 612a-612f are arranged in a row in the X direction. The placement, shape, and type of the monitor manipulator 612 may be changed as appropriate.

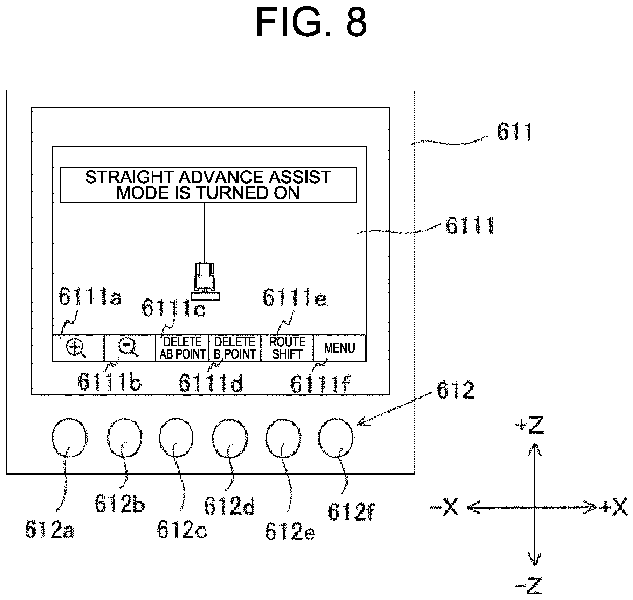

FIG. 8 is a schematic diagram to explain about a configuration of the monitor manipulator 612 according to the present embodiment. FIG. 8 is a diagram extracting the configuration near the monitor manipulator 612 shown in FIG. 5. Also, in FIG. 8, it is assumed that the registration of the above mentioned point A and point B is completed and the autonomous travel is ready to start. The display screen 611 shows an image 6111 that prompts the user to start the autonomous steering travel (straight advance assist mode). At the end of the -Z side of the image 6111, operation content images 6111a-6111f, which indicate multiple operation contents that can be performed with the monitor manipulator 612, are displayed in a row in the X direction.

The first operation content image 6111a indicates the operation content that can be performed with the first operation button 612a. The second operation content image 6111b indicates the operation content that can be performed with the second operation button 612b. The third operation content image 6111c indicates the operation content that can be performed with the third operation button 612c. The fourth operation content image 6111d indicates the operation content that can be performed with the fourth operation button 612d. The fifth operation content image 6111e indicates the operation content that can be performed with the fifth operation button 612e. The sixth operation content image 6111f indicates the operation content that can be performed with the sixth operation button 612f.

In this way, in the present embodiment, an arrangement order in the X direction of the operation buttons 612a-612f configuring the monitor manipulator 612 is the same as an arrangement order in the X direction of the operation content images 6111a-6111f that indicate the operation contents that can be performed with the operation buttons 612a-612f. The operation buttons 612a-612f and the operation content images 6111a-6111f which indicate the contents that can be performed with the operation buttons are arranged side by side in the Z direction (up-down direction). Arranging the buttons in this way makes it easy to grasp the operations of the operation buttons 612a-612f and to perform the appropriate operations.

In the present embodiment, the monitor manipulator 612 is configured of a physical button, but this is a mere example. For example, the display screen 611 may be configured of a touch panel, and the monitor manipulator may be configured of the touch panel. In this case, the monitor manipulator may be realized as soft keys (software keys) displayed on the display screen 611. The operation content image itself, which indicates the operation content, may be deemed as a soft key.

### 2-2. Alternative Embodiment of Display Device]

In the foregoing, the second manipulation member 621b is configured as a route correction manipulation member, but this is a mere example.

### 2-2-1. First Alternative Embodiment

The second manipulation member 621b may be a mode switching manipulation member that allows to transit to the autonomous travel mode which enables operations associated with the autonomous travel. In the present alternative embodiment, unless the mode switching manipulation member sets the transit to the autonomous travel mode, it is impossible to perform operation of the first manipulation member 621a and settings associated with autonomous travel (e.g., registration of the point A and the point B) by the monitor manipulator 612. Such a mode switching manipulation member is not essential, and when providing a mode switching manipulation member, the second manipulation member 621b may be used as the mode switching manipulation member.

Although the second manipulation member 621b which is configured as a mode switching manipulation member may be a seesaw switch, the second manipulation member 621b may also be of other configurations, such as a push-type operation button, an operation lever, or an operation dial.

The present alternative embodiment may be configured such that when the mode switching manipulation member sets the transit to the autonomous travel mode, the abovementioned reference line L (see FIGS. 4A to 4C) can be set. Furthermore, the present alternative embodiment may be configured such that when the reference line L is set and the predetermined conditions are met, the autonomous travel can be started using the first manipulation member 621a. According to operations of the mode switching manipulation member, a notification process may be performed to inform the user of the operation having been performed and the state having been realized by the operation. The means of notification by the notification process may be a screen display or a voice guidance, for example. Such a notification process when the manipulation member 621 is operated may be performed as appropriate not only in the present embodiment but also in the embodiments mentioned above.

The present alternative embodiment may be configured such that when the mode switching manipulation member is operated during the autonomous travel, such operation is not accepted or is accepted. In the configuration where operation of the mode switching manipulation member during the autonomous travel is accepted, when the mode switching manipulation member is operated, for example, an emergency stop or a mode switch from the autonomous travel to a manual driving may be conducted.

### 2-2-2. Second Alternative Embodiment

The second manipulation member 621b may be a reference line setting manipulation member that enables setting of the reference line L used to generate the route for the autonomous travel. Although the embodiment described above is configured to set the reference line L using the monitor manipulator 612, in the present alternative embodiment, the reference line L is set by the second manipulation member 621b which is configured as the reference line setting manipulation member.

The second manipulation member 621b, which is configured as the reference line setting manipulation member, may be the seesaw switch or other configuration such as a push-type operation button, an operation lever, an operation dial, etc. For example, in the case where the reference line setting manipulation member is configured as the operation button, the reference line setting manipulation member may include an operation button for point A and an operation button for point B.

The second manipulation member 621b, which is configured as the reference line setting manipulation member, may be configured to have functions both as a push-type operation button and as an operation dial. In the case where the reference line L is set by the method shown in FIG. 4A, the present alternative embodiment may be configured so that the point A is registered when the reference line setting manipulation member is pressed down once, and the point B is registered when the reference line setting manipulation member is pressed down again after the point A is registered. In the case where the reference line L is set by the method shown in FIG. 4B, the present alternative embodiment may be configured so that when the reference line setting manipulation member is pressed down once, the reference line L is automatically set according to the orientation of the vehicle body 2 at a time when the reference line setting manipulation member is pressed down. In the case where the reference line L is set by the method shown in FIG. 4C, the present alternative embodiment may be configured so that the reference line L is set automatically when the reference line manipulation member is pressed down after the azimuth angle is set by rotating the reference line manipulation member. The azimuth angle may be set before or after the method shown in FIG. 4C is selected.

### 2-2-3. Third Alternative Embodiment

The second manipulation member 621b may be a reference line setting mode selection manipulation member that enables selection of a reference line setting mode used for setting the reference line L used to generate the route for the autonomous travel. The reference line setting modes include the first reference line setting mode which sets the reference line L using the method shown in FIG. 4A mentioned above, the second reference line setting mode which sets the reference line L using the method shown in FIG. 4B mentioned above, and the third reference line setting mode which sets the reference line L using the method shown in FIG. 4C mentioned above, for example. The reference line setting mode selection manipulation member is used to select one reference line setting mode from among the first reference line setting mode, the second reference line setting mode, and the third reference line setting mode, for example.

Although the second manipulation member 621b, which is configured as the reference line setting mode selection manipulation member, may be the seesaw switch or the like, the second manipulation member 621b may be configured to have functions both as a push-type operation button and as an operation dial, for example. When the reference line setting mode selection manipulation member having such the configuration is used, the reference line setting mode may be selected through a first step and a second step described below, for example. The first step is to change a selectable reference line setting mode on the display screen 611 by rotating the reference line setting mode selection manipulation member. The second step is to decide a reference line setting mode to be selected by pressing down the reference line setting mode selection manipulation member with reference line setting modes desired to be selected being displayed.

The reference line setting mode selection manipulation member may have a function as the reference line setting manipulation member shown in the second alternative embodiment. In this case, the reference line setting mode selection manipulation member may be configured to first select the reference line setting mode and then set the reference line L according to the selected reference line setting mode method.

### 2-2-4. Fourth Alternative Embodiment

The second manipulation member 621b may be a registered reference line selection manipulation member that enables selection of a reference line L to be used from among the reference lines L that have been registered in advance as a reference lines L used to generate the route for the autonomous travel. The second manipulation member 621b which is configured as the registered reference line selection manipulation member, although it is not limited hereto, may be configured to have functions both as a push-type operation button and as an operation dial. An example of use is described below in the case where the registered reference line selection manipulation member has such the configuration.

For example, a state, where a selection screen for selecting the registered reference lines L is displayed on the display screen 611, is realized. Although this state may be realized by operation of the registered reference line selection manipulation member, this state may be realized by operation of other manipulation means, such as the monitor manipulator 612. Although the display of the registered reference line L on the display screen 611 may be configured to simply display the registered name, it may, for example, be configured to display an icon indicating the name of the registered reference line L together with a work screen showing work setting conditions, the reference line L, etc.

With the registered reference line L (hereinafter, also referred to as registered reference line) being displayed on the display screen 611, the first and second steps shown below may be performed to select the registered reference line desired to be selected, for example. The first step is to change a selectable registered reference line on the display screen 611 by rotating the registered reference line selection manipulation member. The second step is to decide a registered reference line to be selected by pressing down the registered reference line selection manipulation member with registered reference lines desired to be selected being displayed.

The registered reference line selection manipulation member may be configured to able to perform various types of settings of the work (e.g., work type, work width, etc.). In addition, the notification process such as a voice notification may be performed in response to a switch in settings.

### 2-3. Placement of Display Device on Tractor and Mounting Structure thereof

Next, placement and a mounting structure of the display device 60 in the tractor 1, which is configured as described above, will be explained in detail below.

### 2-3-1. Placement of Display Device

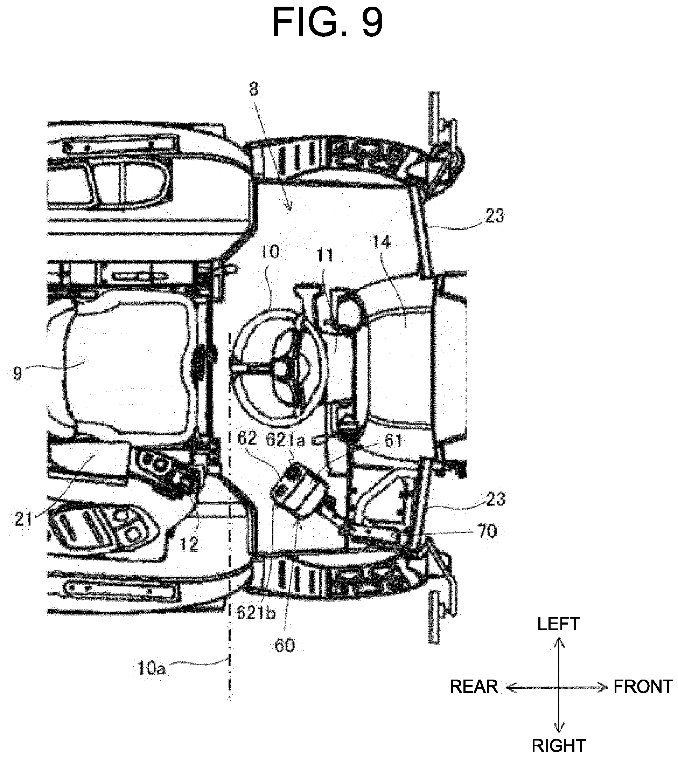

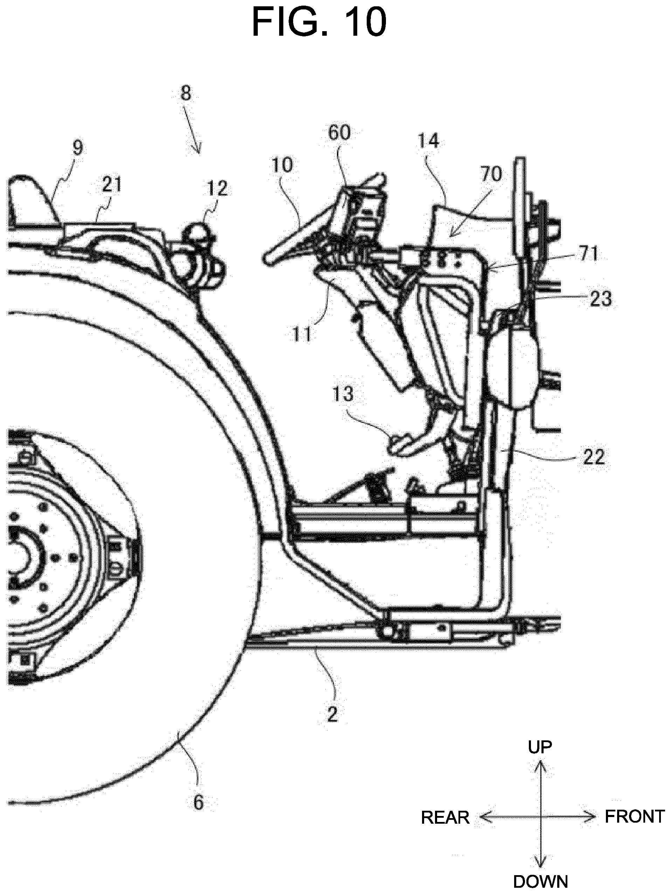

FIG. 9 is an enlarged schematic plan view around the cockpit 8 of the tractor 1 according to the present embodiment. FIG. 10 is an enlarged schematic side view around the cockpit 8 of the tractor 1 according to the present embodiment.

As shown in FIG. 9, the display device 60 is located on one side of the steering manipulator 10 in the left-right direction. This configuration can prevent the view from being interrupted by the steering manipulator 10 or reduce operation from being interfered with by the steering manipulator 10, thereby improving the visibility and operability of the display device 60. Also, it makes the driver easy to keep the visibility in front of the driver's seat 9. In the present embodiment, the display device 60 is located on the right side of the steering manipulator 10. However, this is a mere example, and the display device 60 may be located to the left side of the steering manipulator 10.

The display devices 60 are arranged side by side on one side of the steering manipulator 10 in the left-right direction. In detail, as shown in FIG. 10, at least part of the display device 60 is positioned at the same height as the steering manipulator 10. Since the steering manipulator 10 and the display device 60 are positioned in such a height relationship, the driver operating the steering manipulator 10 can easily operate the display device 60. In addition, the driver sitting on the driver's seat 9 can easily see the display screen 611 of the display device 60.

As shown in FIGS. 9 and 10, the display device 60 is positioned on more front side than a rear end 10a of the steering manipulator 10. This configuration allows the possibility, in which the display device 60 interferes with the driving operation of the tractor 1, to be reduced.

As shown in FIGS. 9 and 10, the display device 60 is located in front of an armrest 21, which is positioned at the side of the driver's seat 9. In detail, the armrest 21 is located on the right side of the driver's seat 9. At least part of the display device 60 is positioned at the same height as the armrest 21. This configuration allows the display device 60 to be located near a position where the driver's hand (right hand in the present embodiment) is most likely to be placed, thereby making it easier for the driver to operate the display device 60.

In more detail, in the present embodiment, the operation lever 12 is placed in front of the armrest 21. In detail, the operation lever 12 is a main speed shift lever that adjusts the speed of the tractor 1. The display device 60 is located in front of the operation lever 12. At least part of the display device 60 is at the same height position as the operation lever 12. This allows the driver to easily access the display device 60 from a gripping state of the operation lever 12. As a result, the operability of the display device 60 can be improved.

In the present embodiment, it is preferred that the first manipulation member 621a of the display device 60 is positioned on more steering manipulator 10 side than the second manipulation member 621b. However, the first manipulation member 621a may be located on more far side from the steering manipulator 10 than the second manipulation member 621b.

In detail, since the display device 60 is positioned to the right side of the steering manipulator 10, it is preferred that the first manipulation member 621a is positioned on more left side than the second manipulation member 621b. In the case where the display device 60 is located on the left side of the steering manipulator 10, it is preferred that the first manipulation member 621a is located on more right side than the second manipulation member 621b.

Since the first manipulation member 621a, which turns on and off the autonomous travel, is located close to the driver, the driver can easily switch between on and off for the autonomous travel. This allows the possibility, in which the driver mistakes the switching operation for other operations, to be reduced. The driver can operate the second manipulation member 621b, which is located on the right side of the first manipulation member 621a, by gripping the right side of the manipulator 62. In the present embodiment, since the second manipulation member 621b is a seesaw switch, the operability can be improved by gripping the right side of the manipulator 62 in such a way. As mentioned above, in the present embodiment, the second manipulation member 621b, which is configured as a seesaw switch, can be used to perform an offset operation of the route for the autonomous travel.

2-3-2. Mounting Structure of Display Device As shown in FIG. 10, the cockpit 8 is provided with a mudguard 22. In detail, the mudguard 22 is provided at the front end of the cockpit 8. In the present embodiment, the mudguard 22 is a mudguard which is composed of a transparent material so as not to interrupt the forward visibility. The mudguard 22 may be an acrylic plate, for example. The mudguards 22 are provided at the front ends of the left and right sides of the cockpit 8.

The tractor 1 is further equipped with a frame 23 that supports the mudguard 22 (hereinafter, referred to as mudguard frame 23). In the present embodiment, the display device 60 is mounted on the tractor 1 with the mudguard frame 23. In detail, the display device 60 is mounted on the tractor 1 with the mudguard frame 23, which supports the right side mudguard 22 of the left and right mudguards 22.

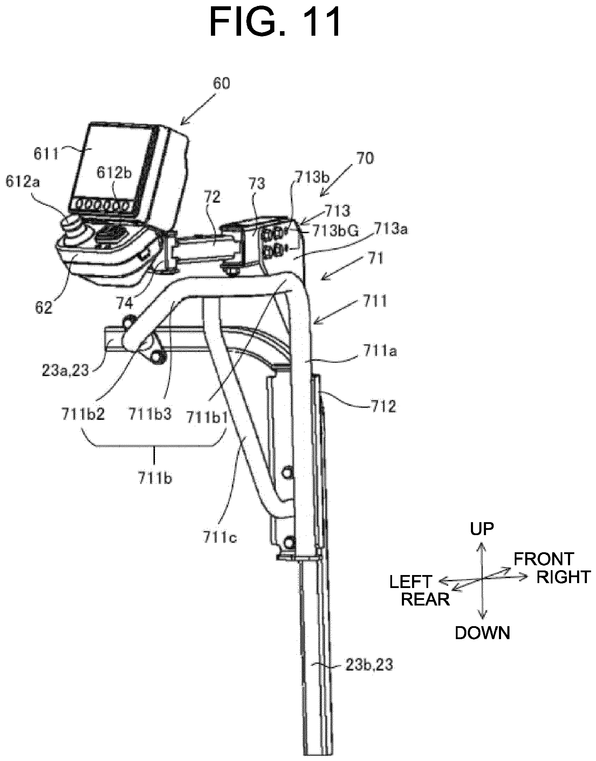

A support member 70 that supports the display device 60 is located in the cockpit 8. FIG. 11 is a schematic perspective view illustrating a mount structure of the display device 60 on the tractor 1. The support member 70 that supports the display device 60 is attached to the frame 23 of the mudguard 22. In other words, the display device 60 is attached to the mudguard frame 23 using the support member 70 which the tractor 1 includes.

In the present embodiment, the support member 70 has a support stay 71 and an arm member 72. The arm member 72 is supported by the support stay 71 and supports the display device 60. The support member 70 further has a first connection part 73 and a second connection part 74.

The support stay 71 is fixed to the frame that constitutes the cockpit 8. In detail, the support stay 71 is fixed to the mudguard frame 23. Although the support stay 71 may be composed of a single member, in the present embodiment, the support stay 71 is composed of multiple members. The support stay 71 includes a pipe section 711, a pipe section mounting frame 712, and a frame with positioning holes 713.

The pipe section 711 is formed by bending or welding a round pipe, for example. The pipe section 711 has a first pipe section 711a, a second pipe section 711b, and a third pipe section 711c.

The first pipe section 711a extends in the up-down direction. The first pipe section 711a is fixed to the pipe section mounting frame 712 by welding or the like.

One end of the second pipe section 711b is attached to an upper end of the first pipe section 711a, and the other end of the second pipe section 711b is attached to the mudguard frame 23. In detail, the second pipe section 711b has two front-and-rear pipe sections 711b1 and 711b2 extending in the front-rear direction, and a connection pipe section 711b3 connecting each other the rear ends of the two front-and-rear pipe sections 711b1 and 711b2. The other end of the second pipe section 711b is secured to the mudguard frame 23 using a high nut (not shown) that is attached to the mudguard frame 23 by is welding or the like. In detail, the other end of the second pipe section 711b is attached to a horizontal frame section 23a of the mudguard frame 23, which extends horizontally. The horizontal frame section 23a extends generally in the left-right direction, but in the present embodiment, it is slightly tilted to the left-right direction, as shown in FIG. 9, for example.

One end of the third pipe section 711c is attached to the connection pipe section 711b3 which constitutes the second pipe section 711b by welding or the like. The third pipe section 711c extends downward and forward from the one end attached to the second pipe section 711b. The other end of the third pipe section 711c is fixed to the pipe section mounting frame 712 by welding or the like.

The pipe section mounting frame 712 is secured to the mudguard frame 23 by screwing or the like. In detail, the pipe section mounting frame 712 is fixed to a vertical frame section 23b of the mudguard frame 23, which extends in the up-down direction. An upper end of the vertical frame section 23b connects to a right end of the horizontal frame section 23a.

The frame with positioning holes 713 is formed by holding a sheet metal, and the frame with positioning holes 713 is attached to the pipe section 711 by welding or the like. In detail, the frame with positioning holes 713 is attached to a part of the first pipe section 711a and a part of the second pipe section 711b. The frame with positioning holes 713 has a side wall portion 713a that extends in the up-down direction. The top of the side wall portion 713a protrudes above the pipe section 711, and six through holes 713b that penetrate the side wall portion 713a horizontally are provided in the top. The arrangement of the six through holes 713b is composed of three through hole sets 713bG arranged in the front-rear direction, each of which consists of two through holes 713b aligned in the up-down direction. The first connection part 73 is attached to the frame with positioning holes 713 in a position-adjustable manner.

Since the support stay 71 configured as mentioned above is supported by the horizontal frame section 23a and the vertical frame section 23b of the mudguard frame 23, the display device 60 can be strongly supported. This can prevent the display device 60 from shaking due to vibrations during travel of the tractor 1. In addition, since the main part of the support stay 71 is formed with a pipe, strength and rigidity in a compact shape can be realized. The pipe section 711 of the support stay 71 can be used as a handrail when getting on and off the tractor 1.

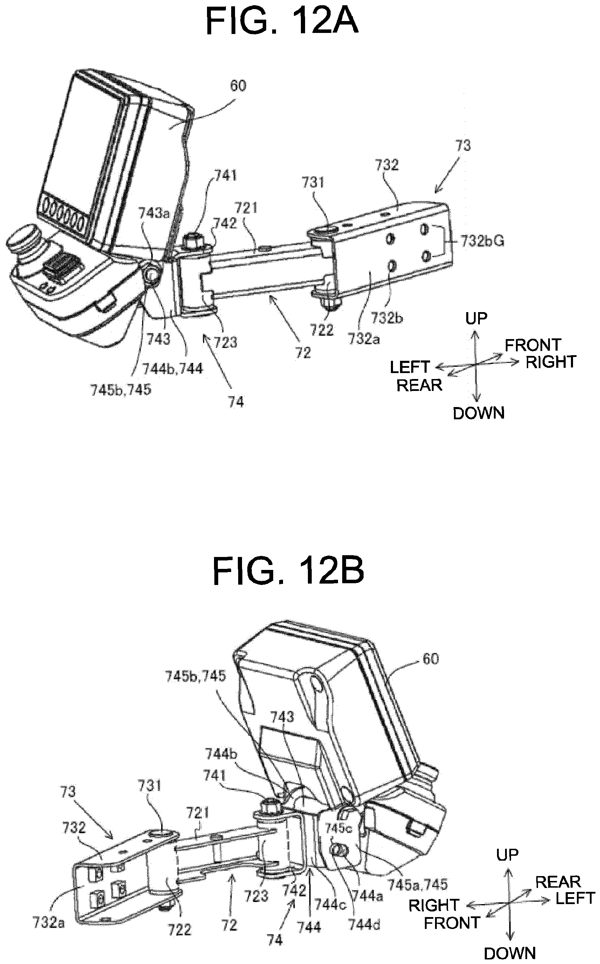

FIGS. 12A and 12B are schematic perspective views illustrating a relationship between the display device 60 and a part of the support member 70. FIGS. 12A and 12B have a difference in the direction to see the object. FIG. 12A is a diagram as viewed from a diagonally backward direction and FIG. 12B is a diagram as viewed from a diagonally forward direction. In addition to FIG. 11, with reference to FIG. 12A and 12B, the mounting structure of the display device 60 is further described below.

The first connection part 73 has a first shaft 731 and a first shaft support frame 732. The first shaft 731 extends in the up-down direction. A front end of the arm member 72 is connected to the first shaft 731. The first shaft support frame 732 supports the first shaft 731 in a fixed manner. The first shaft support frame 732 is formed by holding a sheet metal. The first shaft support frame 732 has a side wall 732a that extends in the up-down direction. Four through holes 732b that penetrate the side wall 732a in the horizontal direction are provided in the side wall 732a. The arrangement of the four through holes 732b is composed of two through hole sets 732bG arranged in the front-rear direction, each of which consists of two through holes 732b aligned in the up-down direction.

The first connection part 73 is fixed to the support stay 71 by aligning the four through holes 732b of the first shaft support frame 732 with four through holes of the six through holes 713b of the frame with positioning holes 713 and screwing them together. When fixing, the user can select a first configuration that uses two through hole sets 713bG (front set and middle set) from among the three through hole sets 713bG of the frame with positioning holes 713, which are arranged in the front-rear direction, or a second configuration that uses two through hole sets 713bG (middle set and rear set) from among the three through hole sets 713bG of the frame with positioning holes 713, which are arranged in the front-rear direction. If the first configuration is selected, the display device 60 can be located on more front side than the display device 60 in the second configuration. Conversely, if the second configuration is selected, the display device 60 can be located on more rear side than the display device 60 in the first configuration.

The arm member 72 has a bar-shaped portion 721, a first cylindrical portion 722 located at the front end of the bar-shaped portion 721, and a second cylindrical portion 723 located at the rear end of the bar-shaped portion 721. The bar-shaped portion 721 is formed by bending a sheet metal. The first cylindrical portion 722 and the second cylindrical portion 723 extend in the up-down direction. The first cylindrical portion 722 and the second cylindrical portion 723 are attached to the bar-shaped portion 721 by welding or the like.

The arm member 72 is connected to the first connection part 73 with the first shaft 731 of the first connection part 73 being inserted into the first cylindrical portion 722. A friction structure is provided between the first cylindrical portion 722 and the first shaft 731, thereby rotating the arm member 72 with respect to the first connection part 73 and stopping at any position. A torque hinge may be used as the friction structure, for example. The second cylindrical portion 723 is used to connect with the second connection part 74.

The second connection part 74 has a second shaft 741, a second shaft support frame 742, a third shaft 743, a third shaft support frame 744, and a device-side attachment 745. The second shaft 741 extends in the up-down direction. The second shaft support frame 742 supports the second shaft 741 in a fixed manner. The second shaft support frame 742 is formed by bending a sheet metal. The second connection part 74 is connected to the arm member 72 with the second shaft 741 being inserted into the second cylindrical portion 723 of the arm member 72. A friction structure is provided between the second cylindrical portion 723 and the second shaft 741, thereby rotating the second connection part 74 with respect to the arm member 72 and stopping at any position. A torque hinge may be used as the friction structure, for example.

The third shaft 743 extends in the up-down direction. The third shaft support frame 744 supports the third shaft 743. The third shaft support frame 744 is formed by bending a sheet metal. In detail, the third shaft support frame 744 supports the third shaft 743 by a pair of side walls 744a and 744b that extend in the up-down direction and face each other. The third shaft support frame 744 is connected to the second shaft support frame 742 by welding or the like at a back wall portion 744c connecting the pair of side walls 744a and 744b. An aperture for a screw 744d that penetrates the side wall 744a in the horizontal direction is provided in one side wall 744a of the pair of side walls 744a and 744b.

The device-side attachment 745 is formed by bending a sheet metal. The device-side attachment 745 is fixed to the coupling frame 64 (see FIG. 7) that connects the display 61 of the display device 60 and the manipulator 62 by screwing or the like. The device-side attachment 745 has a pair of side walls 745a and 745b that extend in the up-down direction and face each other. The pair of side walls 745a and 745b of the device-side attachment 745 respectively cover the outsides of the pair of side walls 744a and 744b of the third shaft support frame 744 to support the third shaft 743. The third shaft 743 has a screw portion, and the screw portion is combined with a nut 743a to be secured to the third shaft support frame 744 and the device-side attachment 745.

In addition, a long aperture 745c that penetrates the side wall 745a in the horizontal direction is provided in one side wall 745a of the pair of side walls 745a and 745b of the device-side attachment 745. The long aperture 745c overlaps the hole for a screw 744d provided in the side wall 744a of the third shaft support frame 744. A screw (not shown) is fitted into the hole for a screw 744d and the long aperture 745c, and the third shaft support frame 744 and the device-side attachment 745 are secured to each other.

By the screw being removed from the hole for a screw 744d and the screw stopper of the third shaft 743 being loosened, the display device 60 can be rotated around the third shaft 743. In other words, the display device 60 is provided to be rotatable around an axis extending horizontally with respect to the arm member 72. This allows the angle of the display screen 611 of the display device 60 with respect to the horizontal plane to be adjusted. However, in the present embodiment, the display device 60 can rotate around the third shaft 743 to the extent that the hole for a screw 744d and the long aperture 745c overlap each other.

An angle adjustment of the display device 60 with respect to a horizontal plane may be performed at any time by using a torque hinge, not only when the screw is loosened. However, in the present embodiment, the angle of the display device 60 with respect to the horizontal plane can be adjusted only when the screw is loosened so that the angle of the display device 60 is not easily changed by force applied to the display device 60 by the operation of the manipulator 62.

As can be seen from the above, the arm member 72 is provided to be rotatable around an axis extending in the up-down direction with respect to the support stay 71. In detail, the arm member 72 is provided to be rotatable around the first shaft 731 with respect to the support stay 71. The display device 60 is provided to be rotatable around an axis extending in the up-down direction with respect to the arm member 72. In detail, the display device 60 is provided to be rotatable around the second shaft 741 with respect to the arm member 72. These configurations allow the driver to easily adjust the position and orientation of the display device 60 so as to easily operate and easily view the display device 60 for him/herself.

In the present embodiment, when the arm member 72 is rotated around the first shaft 731, the arm member 72 and the first shaft support frame 732 are in contact with each other, so that the arm member 72 cannot be rotated beyond a certain degree. In detail, the arm member 72 and the side wall 732a of the first shaft support frame 732 are in contact with each other, so that the arm member 72 cannot rotate beyond a certain degree. In the first shaft support frame 732, the side wall 732a is provided at the outer side in the left-right direction. In other words, in the present embodiment, the support member 70 has a restricter 732a that restricts the rotation to the outer side in the left-right direction of the arm member 72.

The restricter 732a can prevent the arm member 72 from rotating more than necessary and from colliding with members constituting the cockpit 8. For example, when the tractor is of a cabin specification, the display device 60 can be prevented from colliding with a glass that constitutes the cabin. The first shaft support frame 732 may be configured to have a side wall also on the near side in the left-right direction, so that the rotation to the near side in the left-right direction of the arm member 72 may be restricted.

In the above mentioned embodiment, the arm member 72 is provided with the cylindrical portion 722 and the cylindrical portion 723, and the first connection part 73 and the second connection part 74 are provided with the shaft 731 and the shaft 741, respectively. Such the configuration is a mere example, the shafts may be provided at the both ends of the arm member, and cylindrical portions may be provided at the first connection part and the second connection part, respectively.

Furthermore, although the rotation of the arm member 72 with respect to the support stay 71 and the rotation of the display device 60 with respect to the arm member 72 can be adjusted at any angle using the friction structure, this is also a mere example. The rotation of the arm member 72 with respect to the support stay 71 and the rotation of the display device 60 with respect to the arm member 72 may be configured to be adjustable at predetermined angular intervals.

Instead of a configuration in which the second shaft 741 and the third shaft 743 are used for angular adjustment of the display device 60, a ball joint may be used for the angular adjustment of the display device 60. The arm member 72 is not essential, and the display device 60 may be directly connected in an angle adjustable manner to the support stay 71 without via the arm member 72.

### 2-3-3. Alternative Embodiment of Arrangement of Display Device

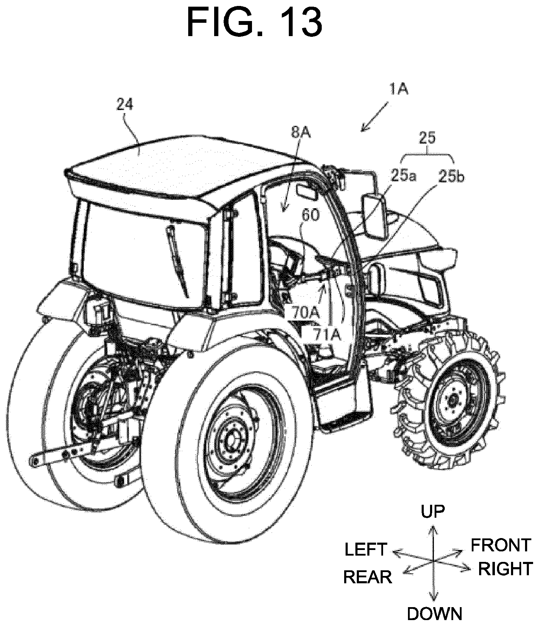

FIG. 13 is a perspective view illustrating schematic configuration of the tractor 1A with a cabin specification. Similar to the tractor 1 described above, the tractor 1A is equipped with the cockpit 8A including the driver's seat 9 and the steering manipulator 10 (see FIG. 1, etc.). A cabin 24 is provided in the cockpit 8A. The cabin 24 covers the driver's seat 9 and steering manipulator 10. FIG. 13 shows the tractor 1A with the right side door of the cabin 24 being removed.

A display device 60 is located inside the cabin 24. The display device 60 is supported by a support member 70A that is located in the cabin 24. The support member 70A, which supports the display device 60, is attached to the frame 25 of the cabin 24 (hereinafter, referred to as cabin frame 25).

Compared to the support member 70 provided in the tractor 1 according to the embodiment described above, the support member 70A is slightly different from the support member 70 in a configuration of a support stay 71A, but otherwise are the same. The support stay 71A is attached to a horizontal frame section 25a extending horizontally of the cabin frame 25 and a vertical frame section 25b extending in the up-down direction of the cabin frame 25. That is, also in the present alternative embodiment, since the support stay 71A is supported by the horizontal frame section 25a and the vertical frame section 25b similar to the above mentioned embodiment, the display device 60 can be strongly supported. This can prevent the display device 60 from shaking due to vibrations during travel of the tractor 1A.

### 3. Another Embodiment

Next, another embodiment will be described below. In explaining another embodiment, the same contents as the embodiment described above are omitted as appropriate. Another embodiment has a configuration suitable for a small work vehicle, but not limited thereto.

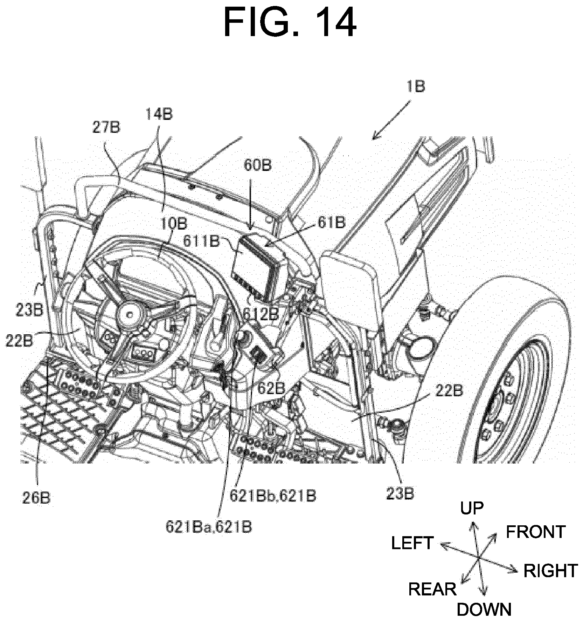

FIG. 14 is a perspective view illustrating a schematic configuration of a tractor 1B according to another embodiment of the present disclosure. FIG. 14 shows an extracted part of components which constitute the tractor 1B. The tractor 1B according to another embodiment is a tractor with a ROPS specification. The mudguards 22B are provided in the cockpit 8B including the driver's seat (not shown in FIG. 14) and the steering manipulator 10B. In detail, the mudguards 22B are located on both sides of the front end of the cockpit 8B. The mudguard 22B is a plate-shaped member spreading in the up-down direction (vertical direction). A pair of mudguard frames 23B that support the mudguards 22B, which are located on both sides of the cockpit 8B, is provided in the cockpit 8B. The pair of mudguard frames are positioned symmetrically with respect to the front panel 14B. Each of the mudguard frames 23B extends in the up-down direction and has a curved structure that curves toward the left-right direction in the top end. The lower end of each of the mudguard frames 23B is secured to the floor 26B and the upper end of each of the mudguard frames 23B is secured to the front panel 14B.

As shown in FIG. 14, the tractor 1B according to another embodiment is also equipped with the display device 60B, which is located on one side of the steering manipulator 10B in the left-right direction, similar to the embodiment described above. In detail, the display device 60B is located on the right side of the steering manipulator 10B. Similar to the embodiment described above, at least part of the display device 60B is positioned at the same height as the steering manipulator 10B. The display device 60B is located on more front side than the rear end of the steering manipulator 10B.

The display device 60B is provided with the display 61B and the manipulator 62B. The display 61B has the display screen 611B. The display screen 611B displays information about the autonomous travel of the tractor 1B. The display 61B has the monitor manipulator 612B that enables operation according to the display on the display screen 611B. The manipulator 62B has the manipulation member 621B that performs operations associated with the autonomous steering. The manipulation member 621B includes the first manipulation member 621Ba and the second manipulation member 621Bb. The first manipulation member 621Ba is a push-type operation button that enables the user to turn on and off the autonomous travel. The second manipulation member 621Bb is a seesaw switch that enables correction of the route for the autonomous travel. These configurations are similar to the embodiment described above.

However, in the display device 60B according to another embodiment, the display 61B is separate from the manipulator 62B, and the both are not connected and integrated into one structure. The display 61B and the manipulator 62B are located separately. In this respect, another embodiment is different from the embodiment mentioned above. The mounting structures of the display device 60B on the tractor 1B is different from the configuration of those according to the embodiment described above. The mounting structures of the display device 60B is described below. The display 61B and the manipulator 62B are electrically connected, and the functions of the display device 60B are the same as those of the display device 60 of the embodiment described above.

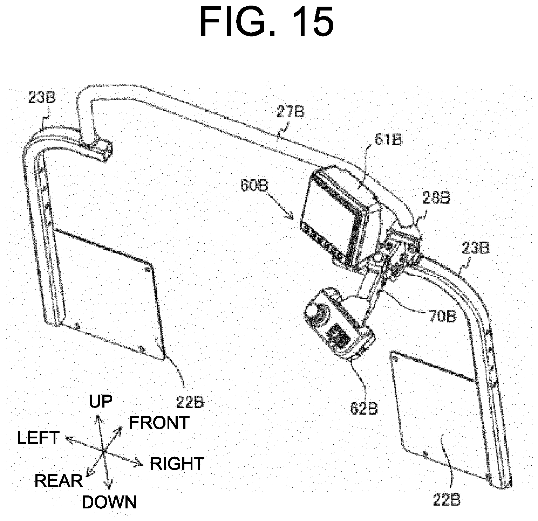

FIG. 15 is a schematic view illustrating mount structures of the display device 60B according to another embodiment. As shown in FIG. 15, the cockpit 8B is provided with a connection member 27B that connects the pair of mudguard frames 23B. The connection member 27B extends in the left-right direction and has a curved structure that curves downward in the ends on each side. The left end of the connection member 27B is fixed to the left side mudguard frame 23B by bolting or welding, for example. The right end of the connection member 27B is fixed to the right side mudguard frame 23B by bolting or welding, for example. The bolting makes it easier to respond to a specification change. The connection member 27B is included in the frame that constitutes the cockpit 8.

A support member 70B that supports the display device 60B is located in the cockpit 8B. In another embodiment, the support member 70B is attached to the connection member 27B. The support member 70B may be attached to the mudguard frame 23B instead of the connection member 27B. However, it is preferred that the support member 70B is attached to the connection member 27B that bridges the left and right mudguard frames 23B. This allows the shaking of the display device 60B due to vibration of the vehicle body to be smaller than a configuration where the support member 70 is attached to the mudguard frame 23B. For the above mentioned embodiment, by providing a similar connection member, a support member supporting the display device 60 may be attached to the connection member.

A pedestal 28B is welded to the right end of the connection member 27B, for example. In other words, the pedestal 28B is integrated with the connection member 27B. The support member 70B is fixed to the pedestal 28B. Such the fixing is carried out using fixtures. The fixtures are bolts and nuts, for example. The display 61B of the display device 60B and the manipulator 62B are mounted at separate locations on the support member 70B.

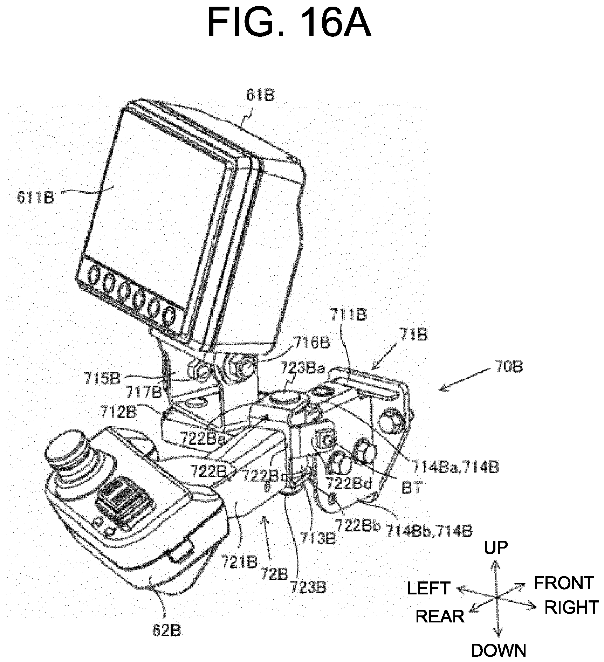

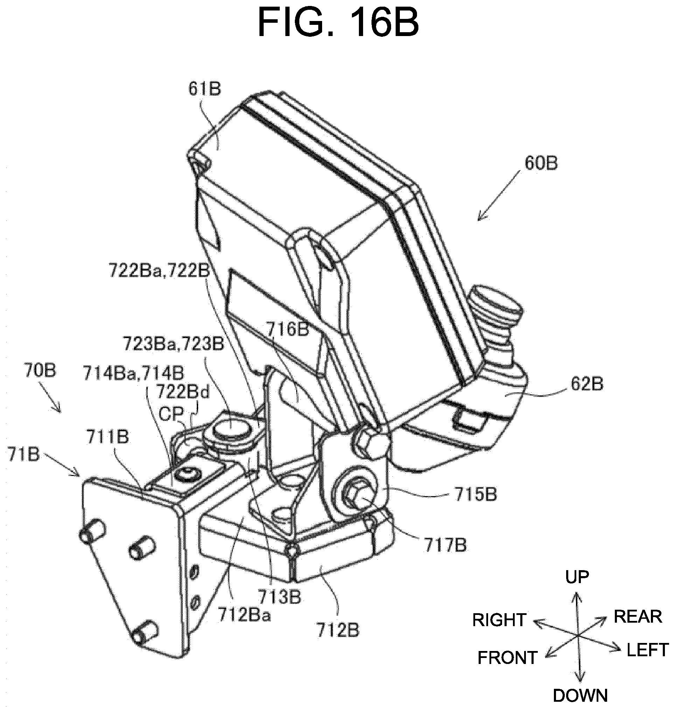

FIGS. 16A and 16B FIG. 16A are schematic perspective views illustrating a relationship between the display device 60B and the support member 70B that the tractor 1B according to another embodiment includes. FIGS. 16A and 16B have a difference in the direction to see the object. FIG. 16A is a diagram of the object viewed from a diagonally backward direction and FIG. 16B is a diagram of the object viewed from a diagonally forward direction.

As shown in FIGS. 16A and 16B, the support member 70B has a support stay 71B and an arm member 72B. The support stay 71B is fixed to the pedestal 28B described above. In other words, the support stay 71B is fixed to the frame that constitutes the cockpit 8B (in detail, to the connection member 27B). The arm member 72B is supported by the support stay 71B.

The support stay 71B is made of metal, for example. Although the support stay 71B may be composed of a single member, in the present embodiment, the support stay 71B is composed of multiple members. The support stay 71B has a stay body portion 711B, a display attachment portion 712B, a shaft attachment portion 713B, and a stopper receiving portion 714B. The stay body portion 711B, the display attachment portion 712B, and the shaft attachment portion 713B are formed as a single member. The stopper receiving portion 714B is a member separate from the member constituting the stay body portion 711B, the display attachment portion 712B, and the shaft attachment portion 713B.

The stay body portion 711B extends in the front-back direction. The stay body portion 711B is fixed to the pedestal 28B (see FIG. 15) using fixtures. The front end of the stay body portion 711B is attached to the pedestal 28B. The display attachment portion 712B protrudes to the left from the left side of the stay body portion 711B. The display attachment portion 712B has a mounting surface 712Ba spread horizontally. The display 61B is located on the mounting surface 712Ba. The shaft attachment portion 713B is located at the rear end of the stay body portion 711B. The shaft attachment portion 713B has a cylindrical shape extending in the up-down direction. A shaft 723B described below is inserted into the shaft attachment portion 713B. The stopper receiving portion 714B has a plate-shaped horizontal portion 714Ba spread horizontally and a plate-shaped vertical portion 714Bb that extends downward from the right end of the horizontal portion 714Ba. The horizontal portion 714Ba is fixed to the upper surface of the stay body portion 711B using fixtures. The vertical portion 714Bb is fixed to the right side of the stay body portion 711B using fixtures.

The arm member 72B is provided to be rotatable around an axis extending vertically with respect to the support stay 71B. This configuration allows the member placed on the arm member 72B to rotate in the horizontal plane. In the present embodiment, a part of components constituting the display device 60B are provided to be rotatable in the horizontal plane using the arm member 72B. The arm member 72B may be provided to be rotatable around an axis extending in a direction different from the axis extending vertically with respect to the support stay 71B. For example, the arm member 72B may be provided to be rotatable around an axis extending horizontally with respect to the support stay 71B. In this way, the arm member 72B can be rotated in the vertical plane. Since the arm member 72B is provided to be rotatable with respect to the support stay 71B, this makes it easier to store the manipulator 62B attached to the arm member 72B.

The arm member 72B has an arm body portion 721B, an arm connection portion 722B, and a shaft 723B. The arm body portion 721B and the arm connection portion 722B are formed as a single member and are made of metal, for example. The shaft 723B is a member separate from the arm body portion 721B and the arm connection portion 722B, and is made of metal, for example.

The arm body portion 721B extends horizontally. The arm connection portion 722B is located at the front end of the arm body portion 721B. The arm connection portion 722B has an upper connection portion 722Ba, a lower connection portion 722Bb, and a middle connection portion 722Bc. The upper connection portion 722Ba and the lower connection portion 722Bb both have a plate shape spread horizontally and are arranged vertically spaced apart. The middle connection portion 722Bc connects the rear end of the upper connection portion 722Ba to the rear end of the lower connection portion 722Bb. The middle connection portion 722Bc connects with the arm body portion 721B. The shaft 723B has a columnar shape extending in the vertical direction. The shaft 723B has a head 723Ba with a larger diameter than other shaft at its upper end.

The shaft attachment portion 713B of the support stay 71B is located between the upper connection portion 722Ba and the lower connection portion 722Bb in the vertical direction. Each of the upper connection portion 722Ba and the lower connection portion 722Bb is provided with a through hole (not shown) that penetrates it in the vertical direction. The shaft 723B passes through with the head portion 723Ba up the through hole of the upper connection portion 722Ba, the cylinder of the shaft attachment portion 713B, and the through hole of the lower connection portion 722Bb. By a nut being attached to the portion protruding downward from the lower connection portion 722Bb, the shaft 723B is fixed to the arm connection portion 722B by screwing. As a result, the arm member 72B is rotatably connected to the support stay 71B.

A friction structure is provided between the shaft attachment portion 713B and the shaft 723B that is inserted into the shaft attachment portion 713B. The arm member 72B can be rotated with respect to the support stay 71B and stopped at any position. A torque hinge may be used as the friction structure, for example.

The display 61B is mounted on the support stay 71B. The manipulator 62B is attached to the arm member 72B. In detail, the manipulator 62 is attached to the rear end of the arm body portion 721B. That is, in another embodiment, the display 61B and the manipulator 62B are attached to different positions of the support member 70B, respectively. The display 61B is positioned on more front side than the manipulator 62B.

In this configuration, the display 61B, which is likely to be higher in the vertical direction, can be placed closer to the front end of the cockpit 8B. This allows the possibility, in which the driver's body hits the display 61B as the driver gets in and out of the cockpit 8B, to be reduced. This effect is expected to be particularly effective when the tractor 1B is smaller. On the other hand, the operability of the manipulator 62B can be reduced because the manipulator 62B is positioned closer to the driver sitting on the driver's seat than the display 61B. Since the display 61B is located on the root side of the support member 70B, this makes it possible to minimize the shaking of the display 61B due to the vibration of the vehicle body. In other words, it makes the contents displayed on the display screen 611B easier to see for the driver.

A protrusion 722Bd that extends diagonally forward is provided at the right end of the middle connection portion 722Bc. A bolt BT is fixed to the forward end of the protrusion 722Bd. A plastic cap CP is attached to the head portion of the bolt BT. The cap CP is positioned on the near side in the left-right direction of the protrusion 722Bd. When the arm member 72B is rotated to the outer side in the left-right direction around the shaft 723B, the cap CP abuts to the stopper receiving portion 714B (vertical portion 714Bb) of the support stay 71B at a certain rotation position. As a result, the arm member 72B is restricted from rotating to the outer side in the left-right direction. In other words, the cap CP and the stopper receiving portion 714B function as a restricter that restricts rotation. The support member 70B has a restricter that restricts the rotation of the arm member 72B to the outer side in the left-right direction. By providing the restricter, it is possible to prevent the arm member 72B from rotating more than necessary. As a result, for example, it is possible to prevent the arm member 72B from colliding with members constituting the cockpit 8B. In the present embodiment, the cap CP is configured to be attached to the head of the bolt BT, but the cap CP may not be attached. The configuration in which the cap CP is attached allows the stopper receiving portion 714B to hardly get a scratch, thereby preventing deterioration in appearance quality.

Furthermore, in another embodiment, the display 61B is provided to be rotatable around an axis extending in the horizontal direction with respect to the support stay 71B. This allows the angle of the display screen 611B of the display 61B to be adjusted with respect to the horizontal plane. In detail, the display 61B is positioned on the display attachment portion 712B via an intermediate member 715B which is positioned in a fixed manner on the mounting surface 712Ba of the display attachment portion 712B. A display rotation shaft 716B, which is composed of a bolt extending in the horizontal direction, is attached to the intermediate member 715B. The display 61B can rotate around the display rotation shaft 716B.

The detailed description of the rotation structure around the axis extending in the horizontal direction is omitted since it is the same as the rotation structure in the display device 60 according to the embodiment mentioned above. By a bolt 717B being removed and the screwing of the display rotation shaft 716B being loosened, the display 61B can rotate around the display rotation shaft 716B. In the present embodiment, the display 61B is configured to be mounted to the support stay 71B in such a manner that the display 61B cannot rotate around an axis extending in the vertical direction, but this is a mere example. The display 61B may be attached to the support stay 71B rotatably around an axis extending in the vertical direction. Such a configuration may be achieved by providing a screw structure or a torque hinge between the display attachment portion 712B and the intermediate member 715B, for example.

The configuration of another embodiment can be applied to the tractor with the cabin specification. In such the configuration, the support member 70B may, for example, be configured to be attached to the horizontal frame section 25a extending horizontally (see FIG. 13) of the cabin frame 25(see FIG. 13). In detail, the support member 70B may be configured to be attached to the pedestal, which is attached to the horizontal frame section 25a.

### 4. Notes, etc.

A variety of technical features disclosed in this specification can be changed in various ways without departing from the spirit of the technical creation. Further, a plurality of embodiments and modified examples may be combined with each other within a possible range.

### 5. Appendix

An exemplary work vehicle of the present disclosure is a work vehicle capable of an autonomous travel including: a driver's seat; a steering manipulator located in front of the driver's seat; and a display device that displays information about the autonomous travel, wherein the display device is located on one side in a left-right direction of the steering manipulator and includes a display that has a display screen to display information about an autonomous travel of the work vehicle; and a manipulator connected to the display and having a manipulation member to enable operation associated with the autonomous travel (first configuration).

In the first configuration mentioned above, at least a part of the display device may be positioned at the same height as the steering manipulator (second configuration).

In the first or second configuration mentioned above, the display device may be positioned on more front side than a rear end of the steering manipulator(third configuration).

In any one of the first to third configurations mentioned above, the display device may be positioned in front of an armrest located on the side of the driver's seat (fourth configuration).

In any of the first to fourth configurations mentioned above, the display device may include a manipulator having manipulation members to perform operation associated with the autonomous travel, the manipulation members may include: a first manipulation member that enables the autonomous travel to be switched on and off; and a second manipulation member that enables operation different from operation of the first manipulation member, and the first manipulation member may be positioned closer to the steering manipulator than the second manipulation member us (fifth configuration).

In any of the first to fifth configurations mentioned above, a support member to support the display device may be located in a cockpit having the driver's seat and the steering manipulator, the support member may include: a support stay fixed to a frame that constitutes the cockpit; and an arm member supported by the support stay that supports the display device, and the arm member may be provided to be rotatable around an axis extending in an up-down direction with respect to the support stay (sixth configuration).

In the sixth configuration mentioned above, the support member may have a restricter that restricts the arm member from rotating to an outer side in the left-right direction (seventh configuration).

In the sixth or seventh configuration mentioned above, the display device may be provided to be rotatable around an axis extending in the up-down direction with respect to the arm member (eighth configuration).

In any of the sixth to eighth configurations mentioned above, the display device may be provided to be rotatable around an axis extending horizontally with respect to the arm member (ninth configuration).

In any of the first to ninth configurations mentioned above, a cabin may be provided in a cockpit including the driver's seat and the steering manipulator, and a support member to support the display device may be attached to a frame for the cabin (tenth configuration).

In any of the first to ninth configurations mentioned above, a mudguard may be provided in a cockpit including the driver's seat and the steering manipulator, and a support member to support the display device may be attached to a frame for the mudguard (eleventh configuration).

In any of the first to ninth configurations mentioned above, a cockpit including the driver's seat and the steering manipulator may have: a pair of mudguard frames that support mudguards located on left and right sides of the cockpit; and a connection member to connect the pair of mudguard frames, and a support member to support the display device may be attached to the connection member (twelfth configuration).

In any of the first to fifth configurations mentioned above, a support member to support the display device may be located in the cockpit including the driver's seat and the steering manipulator, the support member may have: a support stay fixed to a frame that constitutes the cockpit; and an arm member supported by the support stay, and the arm member may be provided to be rotatable with respect to the support stay (thirteenth configuration).

In the thirteenth configuration mentioned above, the display device may have: a display having a display screen; and a manipulator having a manipulation member to perform operations associated with the autonomous travel, the display may be mounted on the support stay, and the manipulator may be attached to the arm member (fourteenth configuration).

In the fourteenth configuration mentioned above, the display may be provided to be rotatable with respect to the support stay (fifteenth configuration).

In the first configuration mentioned above, the manipulator may be located below the display (sixteenth configuration).

In the sixteenth configuration mentioned above, a surface on which the manipulation member of the manipulator is mounted may be inclined with respect to the display screen (seventeenth configuration).

In any of the first, sixteenth, and seventeenth configurations above, the display may have a monitor manipulator, and the display screen may display content that is operated by the monitor manipulator (eighteenth configuration).

In the sixteenth or seventeenth configuration mentioned above, the manipulator may have a shape that tapers downward (nineteenth configuration).

In any of the first and sixteenth to nineteenth configurations mentioned above, the manipulation member may include at least a first manipulation member from among the first manipulation member that enables the autonomous travel to be switched on and off, and a second manipulation member that enables operation different from operation of the first manipulation member (twentieth configuration).

In the twentieth configuration mentioned above, the second manipulation member may be a route correction manipulation member that enables correction of a route for the autonomous travel (twenty-first configuration).

In the twentieth configuration mentioned above, the second manipulation member may be a mode switching manipulation member that enables transition to an autonomous travel mode that enables operation associated with the autonomous travel (twenty-second configuration).

In the twentieth configuration mentioned above, the second manipulation member may be a reference line setting manipulation member that enables setting of a reference line used to generate a route for the autonomous travel (twenty-third configuration).

In the twentieth configuration mentioned above, the second manipulation member may be a reference line setting mode selection manipulation member that enables selection of a reference line setting mode used to set a reference line used to generate a route for the autonomous travel (twenty-fourth configuration).

In the twentieth configuration mentioned above, the second manipulation member may be a registered reference line selection manipulation member that enables selection of a reference line to be used from among reference lines registered as a reference line used to generate a route for the autonomous travel (twenty-fifth configuration).

An exemplary work vehicle of the present disclosure may include a display device according to any one of the first and sixteenth to twenty-fifth configurations mentioned above (twenty-sixth configuration).

### REFERENCE SIGNS LIST

1, 1A, 1B Tractor (work vehicle)
8, 8A, 8B Cockpit
9 Driver's seat
21 Armrest
10, 10B Steering manipulator
60, 60B Display device
61, 61B Display
62, 62B Manipulator
62a Manipulation member placement surface
611 Display Screen
612 Monitor manipulator
621 Manipulation member
621a First manipulation member
621b Second manipulation member
70, 70A, 70B Support member
71, 71A, 71B Support stay
72, 72B Arm member
22, 22B Mudguard
23, 23B Mudguard frame (frame constituting the cockpit)
24 Cabin
25 Cabin frame (frame constituting the cockpit)
732a Restricter

## Claims

1. A work vehicle capable of an autonomous travel comprising:
a driver's seat;
a steering manipulator located in front of the driver's seat; and
a display device that displays information about the autonomous travel,
wherein the display device is located on one side in a left-right direction of the steering manipulator.

2. The work vehicle according to claim 1, wherein at least a part of the display device is positioned at the same height as the steering manipulator.

3. The work vehicle according to claim 1 or 2, wherein the display device is positioned on more front side than a rear end of the steering manipulator.

4. The work vehicle according to claim 1, wherein the display device is positioned in front of an armrest located on the side of the driver's seat.

5. The work vehicle according to claim 1, wherein the display device includes a manipulator having manipulation members to perform operation associated with the autonomous travel,
the manipulation members include:
a first manipulation member that enables the autonomous travel to be switched on and off; and
a second manipulation member that enables operation different from operation of the first manipulation member, and
the first manipulation member is positioned closer to the steering manipulator than the second manipulation member is.

6. The work vehicle according to claim 1, wherein a support member to support the display device is located in a cockpit having the driver's seat and the steering manipulator,
the support member includes:
a support stay fixed to a frame that constitutes the cockpit; and
an arm member supported by the support stay that supports the display device, and
the arm member is provided to be rotatable around an axis extending in an up-down direction with respect to the support stay.

7. The work vehicle according to claim 6, wherein the support member has a restricter that restricts the arm member from rotating to an outer side in the left-right direction.

8. The work vehicle according to claim 6, wherein the display device is provided to be rotatable around an axis extending in the up-down direction with respect to the arm member.

9. The work vehicle according to claim 6, wherein the display device is provided to be rotatable around an axis extending horizontally with respect to the arm member.

10. The work vehicle according to claim 1, wherein a cabin is provided in a cockpit including the driver's seat and the steering manipulator, and
a support member to support the display device is attached to a frame for the cabin.

11. The work vehicle according to claim 1, wherein a mudguard is provided in a cockpit including the driver's seat and the steering manipulator, and
a support member to support the display device is attached to a frame for the mudguard.

12. The work vehicle according to claim 1, wherein a cockpit including the driver's seat and the steering manipulator has:
a pair of mudguard frames that support mudguards located on left and right sides of the cockpit; and
a connection member to connect the pair of mudguard frames, and
a support member to support the display device is attached to the connection member.

13. The work vehicle according to claim 1, wherein a support member to support the display device is located in the cockpit including the driver's seat and the steering manipulator,
the support member has:
a support stay fixed to a frame that constitutes the cockpit; and
an arm member supported by the support stay, and
the arm member is provided to be rotatable with respect to the support stay.

14. The work vehicle according to claim 13, wherein the display device has:
a display having a display screen; and
a manipulator having a manipulation member to perform operations associated with the autonomous travel,
the display is mounted on the support stay, and
the manipulator is attached to the arm member.

15. The work vehicle according to claim 14, wherein the display is provided to be rotatable with respect to the support stay.

16. A display device included in a work vehicle comprising:
a display that has a display screen to display information about an autonomous travel of the work vehicle; and
a manipulator connected to the display and having a manipulation member to enable operation associated with the autonomous travel.

17. The display device according to claim 16, wherein the manipulator is located below the display.

18. The display device according to claim 17, wherein a surface on which the manipulation member of the manipulator is mounted is inclined with respect to the display screen.

19. The display device according to any one of claims 16 to 18, wherein the display has a monitor manipulator, and
the display screen displays content that is operated by the monitor manipulator.

20. The display device according to claim 17 or 18, wherein the manipulator has a shape that tapers downward.

21. The display device according to claim 16, wherein the manipulation member includes at least a first manipulation member from among
the first manipulation member that enables the autonomous travel to be switched on and off, and
a second manipulation member that enables operation different from operation of the first manipulation member.

22. The display device according to claim 21, wherein the second manipulation member is a route correction manipulation member that enables correction of a route for the autonomous travel.

23. The display device according to claim 21, wherein the second manipulation member is a mode switching manipulation member that enables transition to an autonomous travel mode that enables operation associated with the autonomous travel.

24. The display device according to claim 21, wherein the second manipulation member is a reference line setting manipulation member that enables setting of a reference line used to generate a route for the autonomous travel.

25. The display device according to claim 21, wherein the second manipulation member is a reference line setting mode selection manipulation member that enables selection of a reference line setting mode used to set a reference line used to generate a route for the autonomous travel.

26. The display device according to claim 21, wherein the second manipulation member is a registered reference line selection manipulation member that enables selection of a reference line to be used from among reference lines registered as a reference line used to generate a route for the autonomous travel.

27. A work vehicle comprising a display device according to claim 16.
